# EUROPEAN PATENT APPLICATION

(11) **EP 4 618 542 A1**
(43) Date of publication of application: **17.09.2025**
(21) Application number: 24305388.1
(22) Date of filing: 15.03.2024
(51) Int. Cl.: H04N 19/30, H04N 19/187, H04N 19/70

(54) **MULTI-LAYER BITSTREAM CONFORMANCE CHECKING BASED ON SEQUENCE PARAMETER SET AND CORRESPONDING APPARATUS**

(71) Applicant: InterDigital CE Patent Holdings, SAS, 75017 Paris (FR)
(72) Inventor: URBAN, Fabrice, 35235 THORIGNE-FOUILLARD (FR); MARQUANT, Gwenaelle, 35630 LA CHAPELLE CHAUSSEE (FR); DE LAGRANGE, Philippe, 35830 BETTON (FR); SALMON-LEGAGNEUR, Charles, 35000 RENNES (FR)
(74) Representative: Interdigital

(57) **Abstract**

A method for bitstream conformance checking is disclosed. Information representative of a size of pictures contained in a same access unit and associated with a current output layer set is obtained (S500). For a level signaled for the current output layer set, a size of a decoded picture buffer is determined (S502) responsive to the obtained information. Bitstream conformance for the current output layer set is then checked (S504) by comparing the determined size of the decoded picture buffer with a size of the decoded picture buffer required for decoding the current output layer set.

## Description

### TECHNICAL FIELD

At least one of the present embodiments generally relates to a method and an apparatus for conformance checking of a multi-layer video bitstream.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

Coding standards, such as VVC (Versatile Video Coding), define coding configurations by means of profiles, tiers, and levels. These coding configurations impose operational constraints that limit the coding toolsets and the ranges of coding parameters that an encoder can utilize for the compression of a video. The profile (and associated level and tier) according to which a coded video bitstream is generated by the encoder is signaled to a decoder, for the latter to verify whether computational resources can be allocated for the decoding of that bitstream. Similarly, a multilayer video can be encoded according to a multilayer profile. A decoder conforming to the multilayer profile needs to have the processing power to decode the multilayer video. In principle, for each layer, the full toolset available in the encoder may be used, and so the processing power required of a multilayer decoder may be the sum of the processing power required to decode each layer. However, in practice and based on specific application requirements, a different toolset can be applied to the encoding of each layer to control the processing power required for the decoding of each layer, while maintaining acceptable compression performance.

### SUMMARY

In one implementation, bitstream conformance may be checked. In examples, information representative of a size of pictures contained in a same access unit and associated with a current output layer set may be obtained; for a level signaled for the current output layer set, a size of a decoded picture buffer may be determined responsive to the obtained information ; and bitstream conformance for the current output layer set may be checked by comparing the determined size of the decoded picture buffer with a size of the decoded picture buffer required for decoding the current output layer set.

For example, obtaining information representative of a size of pictures contained in the same access unit and associated with a current output layer set may comprise decoding a syntax element a value of which is equal to said size.

In other examples, obtaining information representative of a size of pictures contained in the same access unit and associated with a current output layer set may comprise parsing a first syntax element representative of a picture height and a second syntax element representative of a picture width, wherein a product of values of the first and second syntax elements is equal to the size of pictures contained in the same access unit and associated with a current output layer set.

In another example, information representative of a size of pictures contained in a current output layer set is derived from sequence parameter set syntax elements. More precisely, per layer requirements are obtained from signaled information in the sequence parameter set.

In an example, the size of the decoded picture buffer required for decoding the current output layer set may be parsed from a decoded picture buffer syntax structure.

In yet another example, it may be determined whether decoding the current output layer set in real-time is achievable by comparing a luma sample rate of the signaled level with the obtained information.

In other examples, per-layer requirements may be obtained information for a current output layer set may be parsed; per output layer set requirements may be derived from per-layer requirements using the parsed information for a current output layer set; and bitstream conformance may be checked for the current output layer set responsive to the derived per output layer set requirements.

### BRIEF DESCRIPTION OF THE DRAWINGS

FIG. 1 illustrates a block diagram of a system within which aspects of the present embodiments may be implemented;
FIG. 2 illustrates a block diagram of an embodiment of a video encoder;
FIG. 3 illustrates a block diagram of an embodiment of a video decoder;
FIG. 4 is a diagram illustrating a multilayer encoding/decoding workflow;
FIG. 5A depicts a flowchart of a decoding method according to a specific embodiment;
FIG. 5B depicts a flowchart of an encoding method according to a specific embodiment;
FIG. 6A depicts a flowchart of a decoding method with syntax change according to a specific embodiment;
FIG. 6B depicts a flowchart of a decoding method according to another specific embodiment;
FIG. 7A depicts a flowchart of a decoding method with per-layer requirements decoding according to a specific embodiment;
FIG. 7B depicts a flowchart of an encoding method with per-layer requirements decoding according to a specific embodiment; and
FIG. 8 depicts a flowchart of a decoding method with per-layer requirements decoding according to another specific embodiment.

### DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

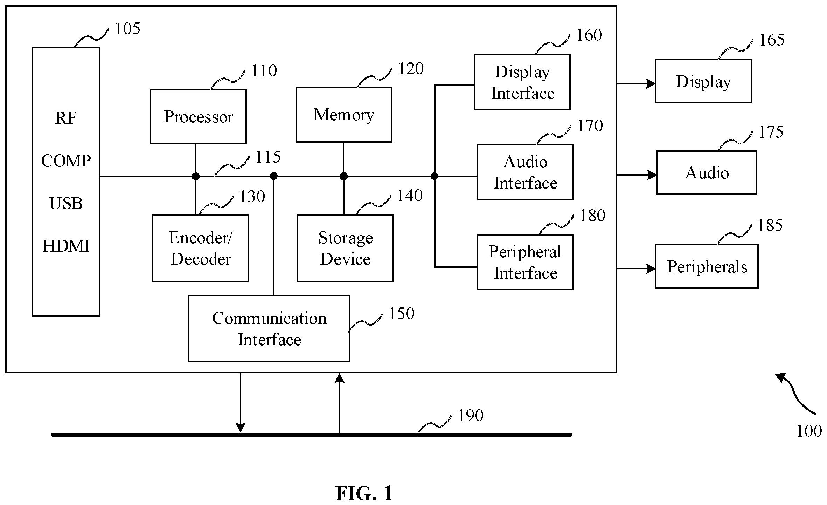

The aspects described and contemplated in this application can be implemented in many different forms. FIGs. 1, 2 and 3 below provide some embodiments, but other embodiments are contemplated and the discussion of FIGs. 1, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "encoded" or "coded" may be used interchangeably, the terms "pixel" and "sample" may be used interchangeably and the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

For the sake of clarity, satisfying, failing to satisfy a condition and configuring condition parameter(s) are described throughout embodiments described herein as relative to a threshold (e.g., greater, or lower than), a (e.g., threshold) value, configuring the (e.g., threshold) value, etc.). For example, satisfying a condition may be described as being above a (e.g., threshold) value, and failing to satisfy a condition (e.g., performance criteria) may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

**FIG. 1** illustrates a block diagram of an example of a system 100 in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 100 may be provided through various input devices as indicated in block 105. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105. As indicated above, various embodiments provide data in a non-streaming manner. Additionally, various embodiments use wireless networks other than Wi-Fi, for example a cellular network or a Bluetooth network.

The system 100 may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other device. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100. For example, a disk player performs the function of playing the output of the system 100.

In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

The embodiments can be carried out by computer software implemented by the processor 110 or by hardware, or by a combination of hardware and software. As a non-limiting example, the embodiments can be implemented by one or more integrated circuits. The memory 120 can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 can be of any type appropriate to the technical environment, and can encompass one or more of microprocessors, general purpose computers, special purpose computers, and processors based on a multi-core architecture, as non-limiting examples.

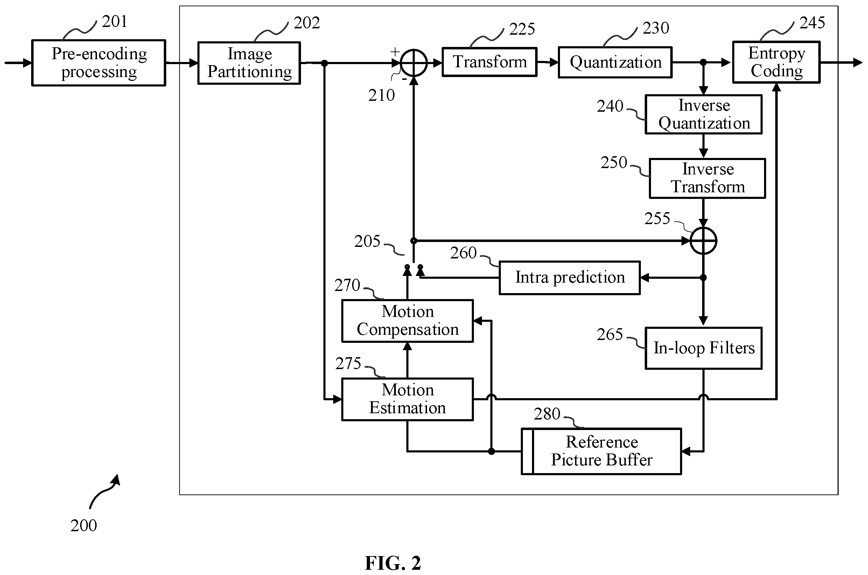

**FIG. 2** illustrates an example video encoder 200, such as a VVC (Versatile Video Coding) encoder. FIG. 2 may also illustrate an encoder in which improvements are made to the VVC standard or an encoder employing technologies similar to VVC.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 200, a picture is encoded by the encoder elements as described below. The picture to be encoded is partitioned (202) and processed in units of, for example, CUs (Coding Units). Each unit is encoded using, for example, either an intra or inter mode. When a unit is encoded in an intra mode, it performs intra prediction (260), e.g. using an intra-prediction tool such as Decoder Side Intra Mode Derivation (DIMD). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block (a.k.a. prediction block) from the original image block.

The prediction residuals are then transformed (225) into transform coefficients c (a.k.a prediction residual transform coefficients) which are quantized (230) into quantization indexes *c_{q}* (a.k.a transform coefficient levels or quantized transform coefficients on the encoder side). The quantization levels (a.k.a quantization indexes) *c_{q}*, as well as motion vectors and other syntax elements such as the picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) (a.k.a. scaled) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280). In-loop filters (265) are thus used to enhance reconstructed images before storing them in the reference picture buffer (280). In-loop filters form a whole family. Among them, deblocking filters (DBF) aim at reducing blocking artifacts occurring along block boundaries. Deblocking filters are usually designed to improve subjective quality, that is, the noticeability of such coding errors by the human psychovisual system. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize a mean squared error with respect to source images, then the learned filter weights are encoded into the bitstream. Adaptive loop filters are usually applied at CTU-level, while deblocking filters are applied along block borders.

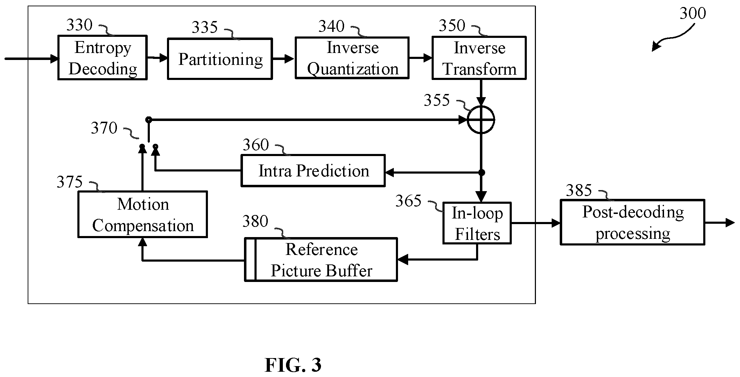

**FIG. 3** illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain quantization levels *c_{q}* (a.k.a. transform coefficient levels or quantization levels on the decoder side), prediction modes, motion vectors, and other coded information. The picture partition information indicates how the picture is partitioned. The decoder may therefore divide (335) the picture according to the decoded picture partitioning information. The quantization levels *c_{q}* are de-quantized (340) into reconstructed transform coefficients *cᵣ*. De-quantization is also named scaling. The reconstructed transform coefficients *cᵣ* are inverse transformed (350) to obtain the prediction residuals. Combining (355) the prediction residuals and the predicted block (a.k.a. prediction block), an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380), also known as DPB ("Decoded Picture Buffer"). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Aspects disclosed herein are described in reference to a CU, however, the described aspects are similarly applicable to any region of the video frame (i.e., video data region) that coding tools may be applied to by an encoder 200 or by a decoder 300. Generally, aspects described herein may be applied to a video data region, formed by a video partition, of any shape or size. A CU includes a luma component, Y, and chroma components, Cr and Cb (either one of which is referred to herein also by C).

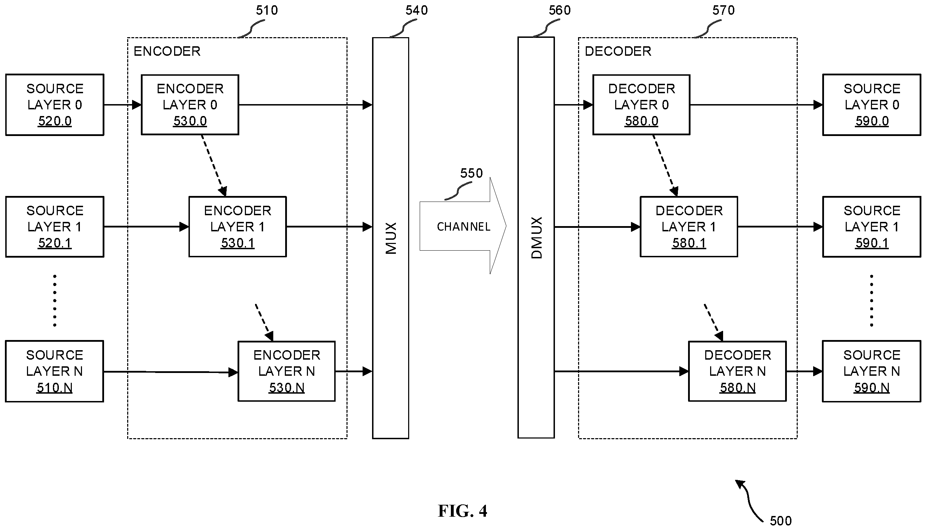

VVC enables multi-layer encoding, with a multi-layered profile, for scalability, multiview or 360° use cases for example. Each layer, corresponding to a source, is coded separately or with inter-layer dependency, and then the bitstream is merged into a single bitstream, with layer information such as depicted on FIG. 4.

**FIG. 4** is a diagram illustrating a multilayer encoding/decoding workflow 500. As shown in the example of FIG. 4, an encoder 510 and a decoder 570 are connected through a multiplexer 540, a channel 550 (e.g., a wired or a wireless communication link(s)), and a de-multiplexer 560. In encoder 510, for each layer, a separate encoder instance can be employed. For example, *N* layer encoders may be employed, such as encoder layer 0 (530.0), encoder layer 1 (530.1), and encoder layer N (530.N) that encode their respective inputs: source layer 0 (520.0), source layer 1 (520.1), and source layer A (520.N). For example, each source can correspond to a different resolution level of the same input picture - from the lowest resolution level (source layer 520.0), through intermediate resolution levels 520.1 to 520.N-1, to the highest resolution level 520.N (source layer 520.N). Additionally, a source layer (e.g., such as 520.1) can be encoded (e.g., by encoder 530.1) relative to a reference picture provided by the encoder of the level below (e.g., encoder 530.0). This creates an interlayer dependency, due to inter-layer prediction (illustrated by the dashed arrows) in both the encoder 510 and the decoder 570 ends.

Hence, for each frame of a video sequence, layer encoders 530.0-N are launched to encode the pictures of respective layers, where an encoder of a lower layer is employed before an encoder of a higher layer because of the dependency introduced by the inter-layer prediction. For every frame, the output bitstreams (i.e., sub-bitstreams) of respective layer encoders 530.0-N are multiplexed 540 into one bitstream. Coded in that bitstream are also layers' ID information (IDentification number) that associate the sub-bitstreams with their respective layer. The layers' ID information can be signaled at the Network Abstraction Layer Unit (NALU) header for example (NALU is a syntax structure containing an indication of the type of data that follow, and bytes containing that data in the form of a raw byte sequence payload interspersed as necessary with emulation prevention bytes). The layer encoders 530.0-N share layer-independent data structures such as APS (Adaptive Parameter Sets) and VPS (Video Parameter Sets) that can also be coded into the bitstream.

The bitstream generated by the encoder 510 is delivered through the channel 550 to the decoder 570 for layered decoding. The delivered bitstream is first de-multiplexed 560 into the layers' respective sub-bitstreams. Thus, the sub-bitstream of layer 0 can be decoded by decoder layer 0 (580.0) independently to generate a reconstructed source layer 0 (590.0), the sub-bitstream of layer 1 can be decoded by decoder layer 1 (580.1) with dependency on output from decoder layer 0 (580.0) (receiving therefrom a reference picture) to generate a reconstructed source layer 1 (590.1), and the sub-bitstream of layer TV can be decoded by decoder layer *N* (580.N) with dependency on output from decoder layer N - 1 (receiving therefrom a reference picture) to generate a reconstructed source layer TV (590.N). Accordingly, for each frame, decoding a multilayer bitstream requires first decoding layers from a lower level before decoding layers from a higher level. In the example of FIG. 4, layer 0 is first decoded 580.0, then layer 1 can be decoded 580.1, and, finally, layer TV can be decoded 580.N. Note that each layer decoder 580.0-N requires full decoding capabilities, including entropy decoding, inverse-quantizing, inverse-transforming, predicting, and in-loop filtering functionalities. This can lead to a processing of high complexity at the decoder end, proportional to the number of layers that have to be decoded for each frame. Further, multilayer encoding/decoding increases memory requirements. Indeed, the DPB (Decoded Picture Buffer) that hold pictures in the decoder before outputting them must be large enough to handle the multiple layers.

The VVC standard defines an output layer set (OLS) as a set of layers for which one or more layers are specified as the output layers. Thus, a given layer needs to be decoded only if it is defined as an output layer or if it is needed as a dependent layer of an output layer. OLSs are typically defined in the VPS. An OLS is signaled by indicating the output layers of the respective OLS. Other layers that belong to that OLS are derived by the layer dependencies indicated in the VPS. OLS is used to (i) signal which layers can be output (together if several layers are indicated as output layers in the same OLS) and which layers will be decoded, and (ii) associate with each VPS some properties, such as a PTL (acronym of Profile, Tier, Level) for each OLS. In practice, for spatially scalable video, the first OLS contains only the base layer that is output, the second OLS contains the second layer as output, and the base layer as dependency, the third OLS contains the third layer as output, and the second and base layers as dependencies (second layer being a direct dependency of third layer, base layer an indirect dependency, needed to decode the second layer). For each OLS, complexity constraints can be different as indicated by its associated PTL.

Considering the practicality of implementing the full syntax defined by the VVC standard, a limited number of subsets of the syntax are defined in VVC by means of a combination of capabilities (a.k.a constraints) known as "profiles", "tiers", and "levels" (namely, PTLs). A certain profile and its associated tiers and levels represent coding configurations that translate to different processing power requirements that a decoder has to satisfy when decoding the respective bitstreams. The VVC's PTLs are defined in annex A of the VVC specification (see Versatile Video Coding Editorial Refinements on Draft 10 (JVET-T2001), 20th Meeting, by teleconference, 7 - 16 Oct. 2020).

A "profile" is a subset of the entire bitstream syntax that is specified in VVC. Said otherwise, profiles define set of tools to be supported by a normative decoder. Within the bounds defined by a given profile there is still a large variation in the performance of the encoder and the decoder that depends on the values used for syntax elements coded into the bitstream (such as the specified size of the decoded pictures). In many applications, it is currently neither practical nor economical to implement a decoder capable of dealing with all hypothetical values of syntax elements within a particular profile. In order to deal with this problem, "tiers" and "levels" are specified within each profile. Thus, a level of a tier is a specified set of constraints applied to values of the syntax elements coded into (or signaled in) the bitstream. A level thus specifies quantitative constraints about maximum normative decoder capabilities, such as for instance the maximum luma sample rate (maximum number of luma samples per second to be processed and produced by the decoder), the maximum bitrate, the maximum picture resolution. Successive levels correspond in general to incremental capabilities. Thus, a decoder conforming to a given level (for instance level 5.0) also conforms to all the lower levels (e.g. levels 1.0 to 4.1). Some of these constraints are expressed as simple limits on values, while others take the form of constraints on arithmetic combinations of values (e.g., picture width multiplied by picture height multiplied by the number of pictures decoded per second). A tier is a specified category of level constraints imposed on values of the syntax elements in the bitstream or values of variables. A level specified for a lower tier is more constrained than a level specified for a higher tier. Profiles, tiers and levels are also used to indicate the capability of individual decoder implementations and interoperability points between encoders and decoders. The level constraints are included within a tier and a decoder conforming to a certain tier and level would be capable of decoding all bitstreams that conform to the same tier or the lower tier of that level or any level below that level.

Any encoding process that produces bitstream data that conform to specified bitstream syntax format requirements of a specification (the specification being for example the VVC Recommendation | International Standard) is considered to be in conformance with the requirements of this specification. A corresponding decoding process is specified such that all decoders that conform to a specified combination of capabilities (a.k.a contraints) known as the profile, tier, and level produce numerically identical cropped decoded output pictures when invoking the decoding process associated with that profile for a bitstream conforming to that profile, tier and level. Any decoding process that produces identical cropped decoded output pictures to those produced by the process described in the specification (with the correct output order or output timing, as specified) is considered to be in conformance with the requirements of the specification.

The constraints as defined by PLT may be used at decoder side to check that a bitstream conforms to the video coding specification or that the decoder conforms to a profile/level signaled in the bitstream. If not, the client that receives and decodes the video bitstream can ask for another version of the video (another bitstream) conforming a profile/level supported by the decoder. Different video decoders (hardware cores of a video decoder, or software implementations of a video decoder) may conform to different profiles and levels. This means that one video decoder may be able to decode bitstreams conforming to a first given profile/level, while it may not be able to decode bitstreams conforming to a second given profile/level different from the first given profile/level.

These constraints may be used at encoder side to ensure that the encoded bitstream conforms to the profile/tier/level targeted by the encoder. The encoder signals the profile, tier and level information in the bitstream for example using a syntax structure such as profile_tier_level( ) syntax structure.

The profile_tier_level( ) syntax structure provides level information and, optionally, profile, tier, sub-profile, and general constraint information to which one or more OLSs conform. The OLS that is associated with a given profile_tier_level( ) syntax structure is defined as the OLS in scope (i.e., OlsInScope). When the profile_tier_level( ) syntax structure is included in a VPS, the OlsInScope is one or more OLSs specified by the VPS. A list of PTLs is defined in the VPS, and for each OLS, an index is signaled that indicates which PTL the current OLS refers to. Thus, a given PTL can be associated to one or more OLSs. When the profile_tier_level( ) syntax structure is included in a sequence parameter set (SPS), the OlsInScope is the OLS that includes only the layer that is the lowest layer among the layers that refer to the SPS, and this lowest layer is an independent layer. In addition, a given level can be specified for a layer's sublayer, associated with a TemporalId value (applicable for temporal scalability use-cases).

The VVC standard also defines a network abstraction layer (NAL) unit, a decoded picture buffer (DPB), a picture unit (PU), and an access unit (AU). A NAL unit is a syntax structure containing an indication of the type of data to follow and bytes containing that data in the form of a raw byte sequence payload (RBSP) interspersed as necessary with emulation prevention bytes. The DPB is a buffer holding decoded pictures for reference, output reordering, or output delay specified for the hypothetical reference decoder (e.g., the reference picture buffers 280 and 380). A PU is a set of NAL units that are associated with each other according to a specified classification rule, are consecutive in decoding order, and contain exactly one coded picture. In other words, a PU represents the bitstream that is associated with one picture. As an example, a PU can contain several slices (in that case the PU contains consecutive Slice NAL units, and associated SPS, APS, SEIs NAL Units). For example, a PU contains the NALU (acronym of NAL Unit) of a VPS, APS, slices data NALUs, SEI referring to one picture. An AU is a set of PUs that belong to different layers and that contains coded pictures to be outputted from the DPB at the same time. In other words, in a multilayer context, an AU represents the bitstream that is associated with a single picture represented by multiple layers. When there is only one layer, an AU contains only one picture.

A dpb_parameters( ) syntax structure provides information of DPB size, maximum picture reorder number, and maximum latency that is required for decoding one or more OLSs. Its syntax is defined in Table 1. When the dpb_parameters( ) syntax structure is included in a VPS, the OLSs to which the dpb_parameters( ) syntax structure applies are specified by the VPS. When the dpb_parameters( ) syntax structure is included in a SPS, it applies to the OLS that includes only the layer that is the lowest layer among the layers that refer to the SPS, and this lowest layer is an independent layer.

**Table 1 - DPB parameters syntax**

| | |
|---|---|
| dpb_parameters( MaxSubLayersMinus1, subLayerInfoFlag ) { | **Descriptor** |
| for( i = ( subLayerInfoFlag ? 0 : MaxSubLayersMinus1 ); i <= MaxSubLayersMinus1; i++ ) { | |
| **dpb_max_dec_pic_buffering_minus1**[ i ] | ue(v) |
| **dpb_max_num_reorder_pics**[ i ] | ue(v) |
| **dpb_max_latency_increase_plus1**[ i ] | ue(v) |
| } | |
| } | |

The semantics of the syntax elements used in Table 1 are specified below.

**dpb_max_dec_pic_buffering_minus1**[ i ] plus 1 specifies the maximum required size of the DPB in units of picture storage buffers when Htid is equal to i. The value of dpb_max_dec_pic_buffering_minus1[ i ] shall be in the range of 0 to MaxDpbSize - 1, inclusive, where MaxDpbSize is defined below. When i is greater than 0, dpb_max_dec_pic_buffering_minus1[ i ] shall be greater than or equal to dpb_max_dec_pic_buffering_minus1[ i - 1 ]. When dpb_max_dec_pic_buffering_minus1[ i ] is not present for i in the range of 0 to MaxSubLayersMinus1 - 1, inclusive, due to subLayerInfoFlag being equal to 0, it is inferred to be equal to dpb _max_dec_pic_buffering_minus1[ MaxSubLayersMinus1 ].

**dpb_max_num_reorder_pics**[ i ] specifies the maximum allowed number of pictures of the OLS that can precede any picture in the OLS in decoding order and follow that picture in output order when Htid is equal to i. The value of dpb_max_num_reorder_pics[ i ] shall be in the range of 0 to dpb_max_dec_pic_buffering_minus1[ i ], inclusive. When i is greater than 0, dpb_max_num_reorder_pics[ i ] shall be greater than or equal to dpb_max_num_reorder_pics[ i - 1 ]. When dpb_max_num_reorder_pics[ i ] is not present for i in the range of 0 to MaxSubLayersMinus1 - 1, inclusive, due to subLayerInfoFlag being equal to 0, it is inferred to be equal to dpb_max_num_reorder_pics[ MaxSubLayersMinus1 ].

**dpb_max_latency_increase_plus1**[ i ] not equal to 0 is used to compute the value of MaxLatencyPictures[ i ], which specifies the maximum number of pictures in the OLS that can precede any picture in the OLS in output order and follow that picture in decoding order when Htid is equal to i.

When dpb_max_latency_increase_plus1[ i ] is not equal to 0, the value of MaxLatencyPictures[ i ] is specified as follows: MaxLatencyPictures [ i ] = dpb_max_num_reorder_pics[ i ] + dpb_max_latency_increase_plus1[i] - 1 When dpb _max_latency_increase_plus1[ i ] is equal to 0, no corresponding limit is expressed.

The value of dpb_max_latency_increase_plus1[ i ] shall be in the range of 0 to 232 - 2, inclusive. When dpb_max_latency_increase_plus1[ i ] is not present for i in the range of 0 to MaxSubLayersMinus1 - 1, inclusive, due to subLayerInfoFlag being equal to 0, it is inferred to be equal to dpb_max_latency_increase_plus1[ MaxSubLayersMinus1 ].

The variable Htid, identifies the highest temporal sublayer to be decoded, is derived as follows.

The following applies in the first AU of the bitstream:

```
 If some external means are available for setting Htid, Htid is set by the external means.
 Otherwise, if opi_htid_plus1 is present in an OPI NAL unit in the first AU of the bitstream,
 Htid is set equal to (( opi_htid_plus1 > 0 ) ? opi_htid_plus1 - 1 : 0 ).
 Otherwise, Htid is set equal to vps_ptl_max_tid[ vps_ols_ptl_idx[ TargetOlsIdx ] ].
 NOTE 3 - When sps_video_parameter_set_id is equal to 0, Htid would be set equal to
 sps_maxsublayers_minus1.
```

For purposes of comparison of tiers' capabilities, the tier with general_tier_flag equal to 0 (i.e., the Main tier) is considered to be a lower tier than the tier with general_tier_flag equal to 1 (i.e., the Higher tier). For purposes of comparison of the capabilities of levels, a particular level of a specific tier is considered to be a lower level than some other level of the same tier when the value of the general_level_idc or sublayer_level_idc[ i ] of the particular level is less than that of the other level.

For an OLS with an OLS index TargetOlsIdx, the variables PicWidthMaxInSamplesY, PicHeightMaxInSamplesY, and PicSizeMaxInSamplesY, and the applicable dpb_parameters() syntax structure are derived as follows:

```
   If NumLayersInOls[TargetOlsIdx] is equal to 1,
 PicWidthMaxInSamplesY is set equal to sps_pic_width_max_in_luma_samples,
 PicHeightMaxInSamplesY is set equal to sps_pic_height_max_in_luma_samples, and
 PicSizeMaxInSamplesY is set equal to
 PicWidthMaxInSamplesY * PicHeightMaxInSamplesY, where
 sps_pic_width_max_in_luma_samples and sps_pic_height_max_in_luma_samples are found
 in the SPS referred to by the layer in the OLS, and the applicable dpb_parameters( ) syntax
 structure is also found in that SPS.
   Otherwise (NumLayersInOls[TargetOlsIdx] is greater than 1),
 PicWidthMaxInSamplesY is set equal to
 vps_ols_dpb_pic_width[ MultiLayerOlsIdx[TargetOlsIdx] ], PicHeightMaxInSamplesY is set
 equal to vps_ols_dpb_pic_height[ MultiLayerOlsIdx[TargetOlsIdx] ],
 PicSizeMaxInSamplesY is set equal to
 PicWidthMaxInSamplesY * PicHeightMaxInSamplesY, and the applicable
 dpb_parameters( ) syntax structure is identified by
 vps_ols_dpb_params_idx[ MultiLayerOlsIdx[ TargetOlsIdx ] ] found in the VPS.
```

Table 2 specifies the limits for each level of each tier for levels other than level 15.5 (i.e., Table 135 in the VVC standard). The level 15.5 is a level with no limit. A tier and a level to which a bitstream conforms are indicated, respectively, by the syntax elements general_tier_flag and general_level_idc; and a level to which a sublayer representation conforms are indicated by the syntax element sublayer_level_idc[ i ], as follows:
If the specified level is not level 15.5, general_tier_flag equal to 0 indicates conformance to the Main tier, general_tier_flag equal to 1 indicates conformance to the High tier, according to the tier constraints specified in Table 2. And, general_tier_flag shall be equal to 0 for levels below level 4 (corresponding to the entries in Table 2 marked with "-"). Otherwise (the specified level is level 15.5), it is a requirement of bitstream conformance that general_tier_flag shall be equal to 1 and the value 0 for general_tier_flag is reserved for future use by ITU-T | ISO/IEC and decoders shall ignore that value of general_tier_flag.
general_level_idc and sublayer_level_idc[ i ] shall be set equal to a value of general_level_idc for the level number specified in Table 2.

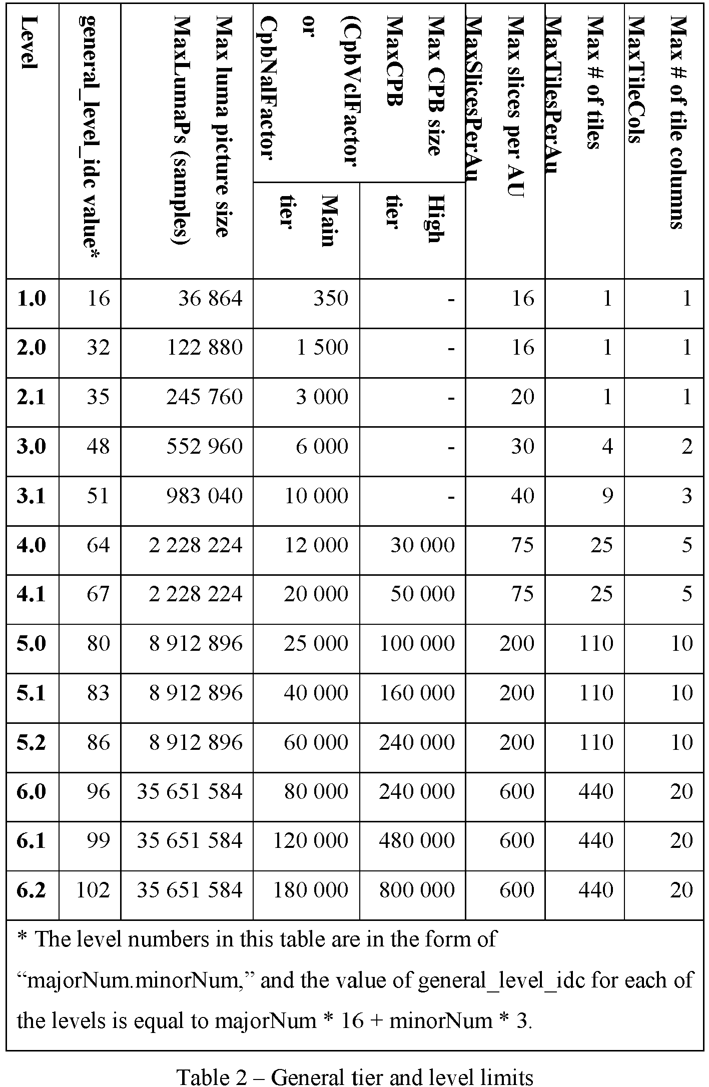

The coded picture buffer (CPB) is a first-in first-out buffer containing DUs in decoding. A decoding unit (DU) is an AU if DecodingUnitHrdFlag is equal to 0 or a subset of an AU otherwise, consisting of one or more VCL NAL units in an AU and the associated non-VCL NAL units. A coded picture is a coded representation of a picture comprising VCL NAL units with a particular value of nuh_layer_id within an AU and containing all CTUs of the picture.

Profile-specific level limits are described next. When the specified level is not level 15.5, the value of dpb_max_dec_pic_buffering_minus1[Htid] + 1 shall be less than or equal to MaxDpbSize, which is derived as follows: 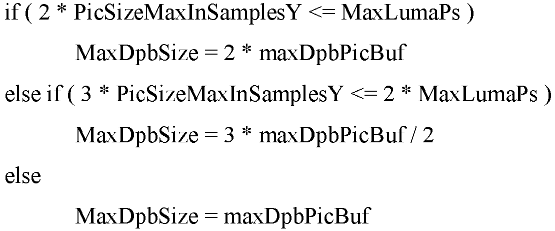 where MaxLumaPs is specified in Table 2, maxDpbPicBuf is equal to 8, and dpb _max_dec_pic_buffering_minus1[Htid] is found in or derived from the applicable dpb_parameters( ) syntax structure. Assuming, numDecPics is the number of pictures in AU n, the variable AuSizeMaxInSamplesY[n] is set equal to PicSizeMaxInSamplesY * numDecPics. It thus represents the maximum number of samples a decoder shall be capable of decoding for an access unit (for each picture).

Table 3 shows tier and level limits for the video profiles (i.e., Table 136 in the VVC standard). According to Table 3, limits for a given profile, level, and tier refer to all the layers of a given OLS. That is, if, for example, two layers have to be decoded, MaxLumaSr of one level would be doubled, compared to single level, to set the proper level to use.

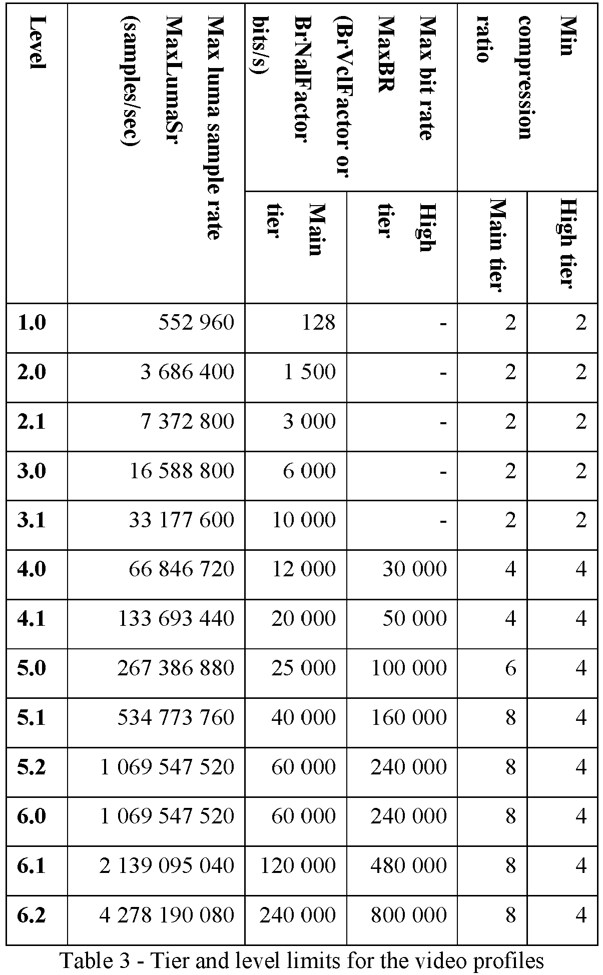

Following is an example for Multilayer Main 10 profile. Bitstreams conforming to the Multilayer Main 10 shall obey the following constraints:
- Referenced SPSs shall have sps_chroma_format_idc equal to 0 or 1 (grey or 4:2:0 YUV video).
- Referenced SPSs shall have sps_bitdepth_minus8 in the range of 0 to 2, inclusive (8 or 10 bits).
- Referenced SPSs shall have sps_palette_enabled_flag equal to 0 (no palette tool is used).
- In a bitstream conforming to the Multilayer Main 10 profile, general_level_idc and sublayer_level_idc[i] for all values of i in the referenced VPS (when available) and in the referenced SPSs shall not be equal to 255 (which indicates level 15.5).
- The tier and level constraints specified for the Multilayer Main 10 profile, as applicable, shall be fulfilled.

Conformance of a bitstream to the Multilayer Main 10 profile is indicated by general_profile_idc being equal to 17.

Decoders conforming to the Multilayer Main 10 profile at a specific level of a specific tier shall be capable of decoding all bitstreams for which all of the following conditions apply:
Condition 1: The bitstream is indicated to conform to the Multilayer Main 10, Main 10, or Main 10 Still Picture profile.
Condition 2: The bitstream is indicated to conform to a tier that is lower than or equal to the specified tier.
Condition 3: The bitstream is indicated to conform to a level that is not level 15.5 and is lower than or equal to the specified level.

The SPS contains information about the video sequence. Example SPS information is provided in table 4.

**Table 4**

| | |
|---|---|
| seq_parameter_set_rbsp( ) { | Descripto r |
| sps_seq_parameter_set_id | u(4) |
| sps_video_parameter_set_id | u(4) |
| sps_max_sublayers_minus1 | u(3) |
| sps_chroma_format_idc | u(2) |
| sps_ptl_dpb hrd_params_present flag | u(1) |
| if( sps_ptl_dpb_hrd_params_present_ flag) | |
| profile_tier_level( 1, sps_max_sublayers_minus1 ) | |
| sps_pic_width_max_in_luma_samples | ue(v) |
| sps_pic_height_max_in_luma_samples | ue(v) |
| if( sps_ptl_dpb_hrd_params_present_flag ) { | |
| if( sps_max_sublayers_minus1 > 0 ) | |
| sps_sublayer_dpb_params_flag | u(1) |
| dpb_parameters( sps_max_sublayers_minus 1, sps_sublayer_dpb_params flag) | |
| } | |

The semantics of the syntax elements used in Table 4 are specified below.

**sps_seq_parameter_set_id** provides an identifier for the SPS for reference by other syntax elements.

**sps**_**video**_**parameter_set_id,** when greater than 0, specifies the value of vps_video_parameter_set_id for the VPS referred to by the SPS.

**sps**_**max**_**sublayers**_**minus1** plus 1 specifies the maximum number of temporal sublayers that could be present in each CLVS referring to the SPS.

**sps_chroma_format_idc** specifies the chroma sampling relative to the luma sampling.

**sps_ptl_dpb**_**hrd**_**params**_**present flag** equal to 1 specifies that a profile_tier_level( ) syntax structure and a dpb_parameters( ) syntax structure are present in the SPS, and a general_timing_hrd_parameters( ) syntax structure and an ols_timing_hrd_parameters( ) syntax structure could also be present in the SPS.

**sps_pic_width_max_in_luma_samples** specifies the maximum width, in units of luma samples, of each decoded picture referring to the SPS. sps_pic_width_max_in_luma_samples shall not be equal to 0 and shall be an integer multiple of Max( 8, MinCbSizeY).

When sps_video_parameter_set_id is greater than 0 and the SPS is referenced by a layer that is included in the i-th multi-layer OLS specified by the VPS for any i in the range of 0 to NumMultiLayerOlss - 1, inclusive, it is a requirement of bitstream conformance that the value of sps_pic_width_max_in_luma_samples shall be less than or equal to the value of vps_ols_dpb_pic_width[ i ].

**sps_pic_height_max_in_luma_samples** specifies the maximum height, in units of luma samples, of each decoded picture referring to the SPS. sps_pic_height_max_in_luma_samples shall not be equal to 0 and shall be an integer multiple of Max( 8, MinCbSizeY).

When sps_video_parameter_set_id is greater than 0 and the SPS is referenced by a layer that is included in the i-th multi-layer OLS specified by the VPS for any i in the range of 0 to NumMultiLayerOlss - 1, inclusive, it is a requirement of bitstream conformance that the value of sps_pic_height_max_in_luma_samples shall be less than or equal to the value of vps_ols_dpb_pic _height i ].

The VPS contains information about the video, in particular about multilayer configuration. For example, the number of layers, the dependencies between layers, and the Output Layer Sets (OLS -layers that can be output together) are transmitted in the VPS. It is transmitted in a VPS-type NAL Unit. It is optional for single-layer video, but mandatory for multilayer video. The syntax of the VPS in VVC is described in Table 5, and the semantics of the syntax element is explained below.

**Table 5 - VPS syntax**

| | |
|---|---|
| video_parameter_set_rbsp( ) { | **Descript or** |
| vps_video_parameter_set_id | u(4) |
| vps_max_layers_minus1 | u(6) |
| vps_max_sublayers_minus1 | u(3) |
| if( vps_max_layers_minus1 > 0 && vps_max_sublayers_minus1 > 0 ) | |
| vps_default_ptl_dpb_hrd_max_tid_flag | u(1) |
| if( vps_max_layers_minus1 > 0 ) | |
| vps_all_independent_layers_flag | u(1) |
| for( i = 0; i <= vps_max_layers_minus1; i++ ) { | |
| vps_layer_id[ i ] | u(6) |
| if( i > 0 && !vps_all_independent_layers_flag) { | |
| vps_independent_layer_flag[ i ] | u(1) |
| if( !vps_independent_layer_flag[ i ] ) { | |
| vps_max_tid_ref_present_flag[ i ] | u(1) |
| for( j = 0; j < i; j++ ) { | |
| vps_direct_ref_layer_flag[ i ][ j ] | u(1) |
| if( vps_max_tid_ref_present_flag[ i ] && vps_direct_ref_layer_flag[ i ][ j ] ) | |
| vps_max_tid_il_ref_pics_plus1[ i ][ j ] | u(3) |
| } | |
| } | |
| } | |
| } | |
| if( vps_max_layers_minus1 > 0 ) { | |
| if( vps_all_independent_layers_flag) | |
| vps_each_layer_is_an_ols_flag | u(1) |
| if( !vps_each_layer_is_an_ols_flag ) { | |
| if( !vps_all_independent_layers_flag ) | |
| vps ols mode idc | u(2) |
| if( vps_ols_mode_idc = = 2 ) { | |
| vps_num_output_layer_sets_minus2 | u(8) |
| for( i = 1; i <= vps_num_output_layer_sets_minus2 + 1; i ++ ) | |
| for(j = 0; j <= vps_max_layers_minus1; j++) | |
| vps_ols_output_layer_flag[ i ][ j ] | u(1) |
| } | |
| } | |
| vps _num_ptls _minus 1 | u(8) |
| } | |
| for( i = 0; i <= vps_num_ptls_minus1; i++ ) { | |
| if( i > 0 ) | |
| vps_pt_present_flag[ i ] | u(1) |
| if( !vps_default_ptl_dpb_hrd_max_tid_flag ) | |
| vps_ptl_max_tid[ i ] | u(3) |
| } | |
| while( !byte_aligned( ) ) | |
| vps_ptl_alignment_zero_bit /* equal to 0 */ | f(1) |
| for( i = 0; i <= vps_num_ptls_minus1; i++ ) | |
| profile_tier_level( vps_pt_present_flag[ i ], vps_ptl_max_tid[ i ] ) | |
| for( i = 0; i < TotalNumOlss; i++ ) | |
| if( vps_num_ptls_minus1 > 0 && vps_num_ptls_minus1 + 1 != TotalNumOlss ) | |
| vps_ols_ptl_idx[ i ] | u(8) |
| if( !vps_each_layer_is_an_ols_flag ) { | |
| vps_num_dpb_params_minus1 | ue(v) |
| if( vps_max_sublayers_minus1 > 0 ) | |
| vps_sublayer_dpb_params_present _flag | u(1) |
| for( i = 0; i < VpsNumDpbParams; i++ ) { | |
| if( !vps_default_ptl_dpb_hrd_max_tid_flag ) | |
| vps_dpb_max_tid[ i ] | u(3) |
| dpb_parameters( vps_dpb_max_tid[ i ], vps_sublayer_dpb_params_present_flag ) | |
| } | |
| for( i = 0; i < NumMultiLayerOlss; i++ ) { | |
| vps_ols_dpb_pic_width[ i ] | ue(v) |
| vps_ols_dpb_pic_height[ i ] | ue(v) |
| vps_ols_dpb_chroma_format[ i ] | u(2) |
| vps_ols_dpb_bitdepth_minus8[ i ] | ue(v) |
| if( VpsNumDpbParams > 1 && VpsNumDpbParams != NumMultiLayerOlss ) | |
| vps_ols_dpb_params_idx[ i ] | ue(v) |
| } | |
| vps_timing_hrd_params_present _flag | u(1) |
| if( vps_timing_hrd_params_present flag ) { | |
| general_timing_hrd_parameters( ) | |
| if( vps_max_sublayers_minus1 > 0 ) | |
| vps_sublayer_cpb_params_present_flag | u(1) |
| vps_num_ols_timing_hrd_params_minus1 | ue(v) |
| for( i = 0; i <= vps_num_ols_timing_hrd_params_minus1; i++ ) { | |
| if( !vps_default_ptl_dpb_hrd_max_tid_flag ) | |
| vps_hrd_max_tid[ i ] | u(3) |
| firstSubLayer = vps_sublayer_cpb_params_present_flag ? 0 : vps_hrd_max_tid[ i ] | |
| ols_timing_hrd_parameters( firstSubLayer, vps_hrd_max_tid[ i ]) | |
| } | |
| if( vps_num_ols_timing_hrd_params_minus1 > 0 && vps_num_ols_timing_hrd_params_minus1 + 1 != NumMultiLayerOlss ) | |
| for( i = 0; i < NumMultiLayerOlss; i++ ) | |
| vps_ols_timing_hrd_idx[ i ] | ue(v) |
| } | |
| } | |
| vps_extension flag | u(1) |
| if( vps_extension _flag) | |
| while( more_rbsp_data( ) ) | |
| vps_extension_data_flag | u(1) |
| rbsp_trailing_bits( ) | |
| } | |

The semantics of the syntax elements used in Table 5 are specified below.

A VPS RBSP (Raw Byte Sequence Payload: A syntax structure containing an integer number of bytes that is encapsulated in a NAL unit) shall be available to the decoding process prior to it being referenced, included in at least one AU with TemporalId equal to 0 or provided through external means. All VPS NAL units with a particular value of vps_video_parameter_set_id in a CVS shall have the same content.

**vps_video_parameter_set_id** provides an identifier for the VPS for reference by other syntax elements. The value of vps _video_parameter_set _id shall be greater than 0.

**vps_max_layers_minus1** plus 1 specifies the number of layers specified by the VPS, which is the maximum allowed number of layers in each CVS referring to the VPS.

**vps_max_sublayers_minus1** plus 1 specifies the maximum number of temporal sublayers that may be present in a layer specified by the VPS. The value of vps_max_sublayers_minus1 shall be in the range of 0 to 6, inclusive.

**vps_default_ptl_dpb_hrd_max_tid_flag** equal to 1 specifies that the syntax elements vps_ptl_max_tid[ i ], vps_dpb_max_tid[ i ], and vps_hrd_max_tid[ i ] are not present and are inferred to be equal to the default value vps_max_sublayers_minus1. vps_default_ptl_dpb_hrd_max_tid_flag equal to 0 specifies that the syntax elements vps_ptl_max_tid[ i ], vps_dpb_max_tid[ i ], and vps_hrd_max_tid[ i ] are present. When not present, the value of vps_default_ptl_dpb_hrd_max_tid_flag is inferred to be equal to 1.

**vps_all independent layers flag** equal to 1 specifies that all layers specified by the VPS are independently coded without using inter-layer prediction. vps_all_independent_layers_flag equal to 0 specifies that one or more of the layers specified by the VPS might use inter-layer prediction. When not present, the value of vps_all_independent_layers_flag is inferred to be equal to 1.

**vps_layer_id[** i ] specifies the nuh_layer_id value of the i-th layer. For any two non-negative integer values of m and n, when m is less than n, the value of vps_layer_id[ m ] shall be less than vps_layer_id[ n ].

**vps_independent_layer_flag[** i ] equal to 1 specifies that the layer with index i does not use inter-layer prediction. vps_independent_layer_flag[ i ] equal to 0 specifies that the layer with index i might use inter-layer prediction and the syntax elements vps_direct_ref_layer_flag[ i ][ j ] for j in the range of 0 to i - 1, inclusive, are present in the VPS. When not present, the value of vps_independent_layer_flag[ i ] is inferred to be equal to 1.

**vps_max_tid_ref_present_flag**[i] equal to 1 specifies that the syntax element vps_max_tid_il_ref_pics_plus1[ i ][ j ] could be present. vps_max_tid_ref_present_flag[ i ] equal to 0 specifies that the syntax element vps_max_tid_il_ref_pics_plus1[ i ] [ j ] is not present. **vps_direct_ref_layer_flag**[ i ][ j ] equal to 0 specifies that the layer with index j is not a direct reference layer for the layer with index i. vps_direct_ref_layer_flag [ i ][ j ] equal to 1 specifies that the layer with index j is a direct reference layer for the layer with index i. When vps_direct_ref_layer_flag[ i ][ j ] is not present for i and j in the range of 0 to vps_max_layers_minus1, inclusive, it is inferred to be equal to 0. When vps_independent_layer_flag[ i ] is equal to 0, there shall be at least one value of j in the range of 0 to i - 1, inclusive, such that the value of vps_direct_ref_layer_flag[ i ][ j ] is equal to 1. The variables NumDirectRefLayers[ i ], DirectRefLayerIdx[ i ][ d ], NumRefLayers[ i ], ReferenceLayerIdx[ i ][ r ], and LayerUsedAsRefLayerFlag[ j ] are derived as follows:

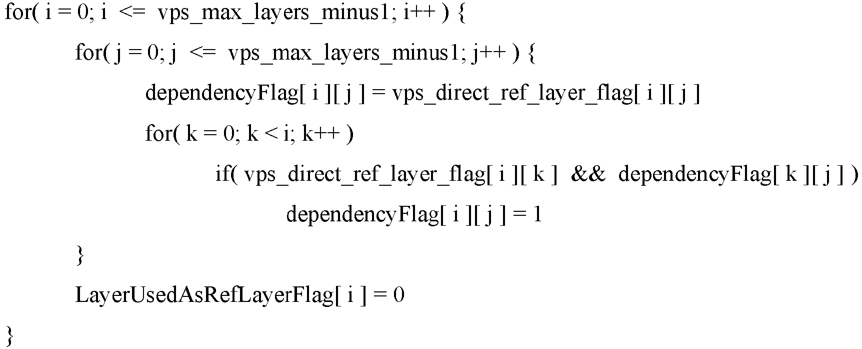

```
for( i = 0; i <= vps_max_layers_minus1; i++ ) {
      for( j = 0, d = 0, r = 0; j <= vps_max_layers_minus1; j++ ) { (28)
            if( vps_direct_ref_layer_flag[ i ][ j ] ) {
                  DirectRefLayerIdx[ i ][ d++ ] = j
                  LayerUsedAsRefLayerFlag[ j ] = 1 }
            if( dependencyFlag[ i ] [ j ] )
                  ReferenceLayerIdx[ i ][ r++ ] = j }
      NumDirectRefLayers[ i ] = d
      NumRefLayers[ i ] = r
 }
```

The variable GeneralLayerIdx[ i ], specifying the layer index of the layer with nuh_layer_id equal to vps_layer_id[ i ], is derived as follows:

```
 for( i = 0; i <= vps_max_layers_minus1; i++ ) (29)
      GeneralLayerIdx[ vps_layer_id[ i ] ] = i
```

For any two different values of i and j, both in the range of 0 to vps_max_layers_minus1, inclusive, when dependencyFlag[ i ] [ j ] equal to 1, it is a requirement of bitstream conformance that the values of sps_chroma_format_idc and sps_bitdepth_minus8 that apply to the i-th layer shall be equal to the values of sps_chroma_format_idc and sps_bitdepth_minus8, respectively, that apply to the j-th layer.

**vps_max_tid_il_ref_pics_plus1**[ i ][ j ] equal to 0 specifies that the pictures of the j-th layer are not used as ILRPs (inter-layer Reference Pictures) for decoding of pictures of the i-th layer. vps_max_tid_il_ref_pics_plus1[ i ][ j ] greater than 0 specifies that, for decoding pictures of the i-th layer, no picture from the j-th layer with TemporalId greater than vps_max_tid_il_ref_pics_plus1[ i ][ j ] - 1 is used as ILRP and no APS with nuh_layer_id equal to vps_layer_id[ j ] and TemporalId greater than vps _max _tid_il_ref_pics_plus1[ i ][ j ] - 1 is referenced. When not present, the value of vps_max_tid_il_ref_pics_plus1[ i ][ j ] is inferred to be equal to vps_max_sublayers_minus1 + 1.

**vps_each_layer_is_an_ols_flag** equal to 1 specifies that each OLS specified by the VPS contains only one layer and each layer specified by the VPS is an OLS with the single included layer being the only output layer. vps_each_layer_is_an_ols_flag equal to 0 specifies that at least one OLS specified by the VPS contains more than one layer. If vps_max_layers_minus1 is equal to 0, the value of vps_each_layer_is_an_ols_Rag is inferred to be equal to 1. Otherwise, when vps_all_independent_layers_flag is equal to 0, the value of vps_each_layer_is_an_ols_flag is inferred to be equal to 0.

**vps_ols_mode_idc** equal to 0 specifies that the total number of OLSs specified by the VPS is equal to vps_max_layers_minus1 + 1, the i-th OLS includes the layers with layer indices from 0 to i, inclusive, and for each OLS only the highest layer in the OLS is an output layer.

vps_ols_mode_idc equal to 1 specifies that the total number of OLSs specified by the VPS is equal to vps_max_layers_minus1 + 1, the i-th OLS includes the layers with layer indices from 0 to i, inclusive, and for each OLS all layers in the OLS are output layers.

vps_ols_mode_idc equal to 2 specifies that the total number of OLSs specified by the VPS is explicitly signalled and for each OLS the output layers are explicitly signalled and other layers are the layers that are direct or indirect reference layers of the output layers of the OLS.

The value of vps_ols_mode_idc shall be in the range of 0 to 2, inclusive. The value 3 of vps_ols_mode_idc is reserved for future use by ITU-T | ISO/IEC. Decoders conforming to this version of this Specification shall ignore the OLSs with vps_ols_mode_idc equal to 3.

When vps_all_independent_layers_flag is equal to 1 and vps_each_layer_is_an_ols_flag is equal to 0, the value of vps_ols_mode_idc is inferred to be equal to 2.

**vps_num_output_layer_sets_minus2** plus 2 specifies the total number of OLSs specified by the VPS when vps_ols_mode_idc is equal to 2.

The variable olsModeIdc is derived as follows:

```
 if( !vps_each layer is an ols flag)
      olsModeIdc = vps_ols_mode_idc (30)
 else
      olsModeIdc = 4
```

The variable TotalNumOlss, specifying the total number of OLSs specified by the VPS, is derived as follows:

```
 if( olsModeIdc = = 4 ∥ olsModeIdc = = 0 ∥ olsModeIdc = = 1)
      TotalNumOlss = vps_max_layers_minus1 + 1 (31)
 else if( olsModeIdc = = 2 )
      TotalNumOlss = vps_num_output_layer_sets_minus2 + 2
```

**vps_ols**_**output**_**layer**_**flag**[ i ][ j ] equal to 1 specifies that the layer with nuh_layer_id equal to vps_layer_id[ j ] is an output layer of the i-th OLS when vps_ols_mode_idc is equal to 2. vps_ols_output_layer_flag[ i ][ j ] equal to 0 specifies that the layer with nuh_layer_id equal to vps_layer_id[ j ] is not an output layer of the i-th OLS when vps_ols_mode_idc is equal to 2. Note: when vps_ols_mode_idc is equal to 2, vps_ols_output_layer_flag[ 0 ][ j ] is not present and can be inferred to be equal to 1 if j==0, 0 otherwise (the first OLS contains only the first layer).

The variable NumOutputLayersInOls[ i ], specifying the number of output layers in the i-th OLS, the variable NumSubLayersInLayerInOLS[ i ][ j ], specifying the number of sublayers in the j-th layer in the i-th OLS, the variable OutputLayerIdInOls[ i ][ j ], specifying the nuh_layer_id value of the j-th output layer in the i-th OLS, and the variable LayerUsedAsOutputLayerFlag[ k ], specifying whether the k-th layer is used as an output layer in at least one OLS, are derived as follows from the VPS information:

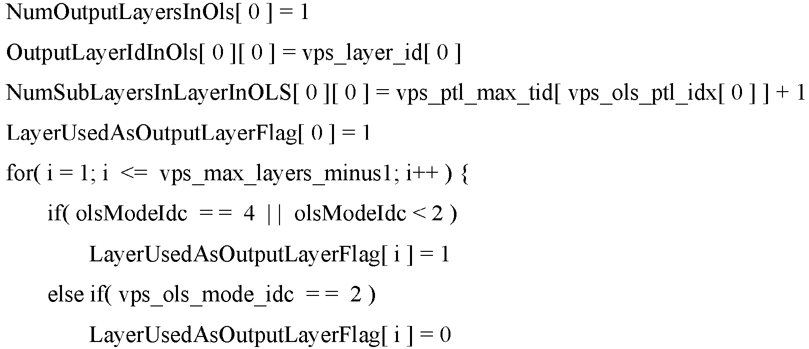

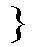

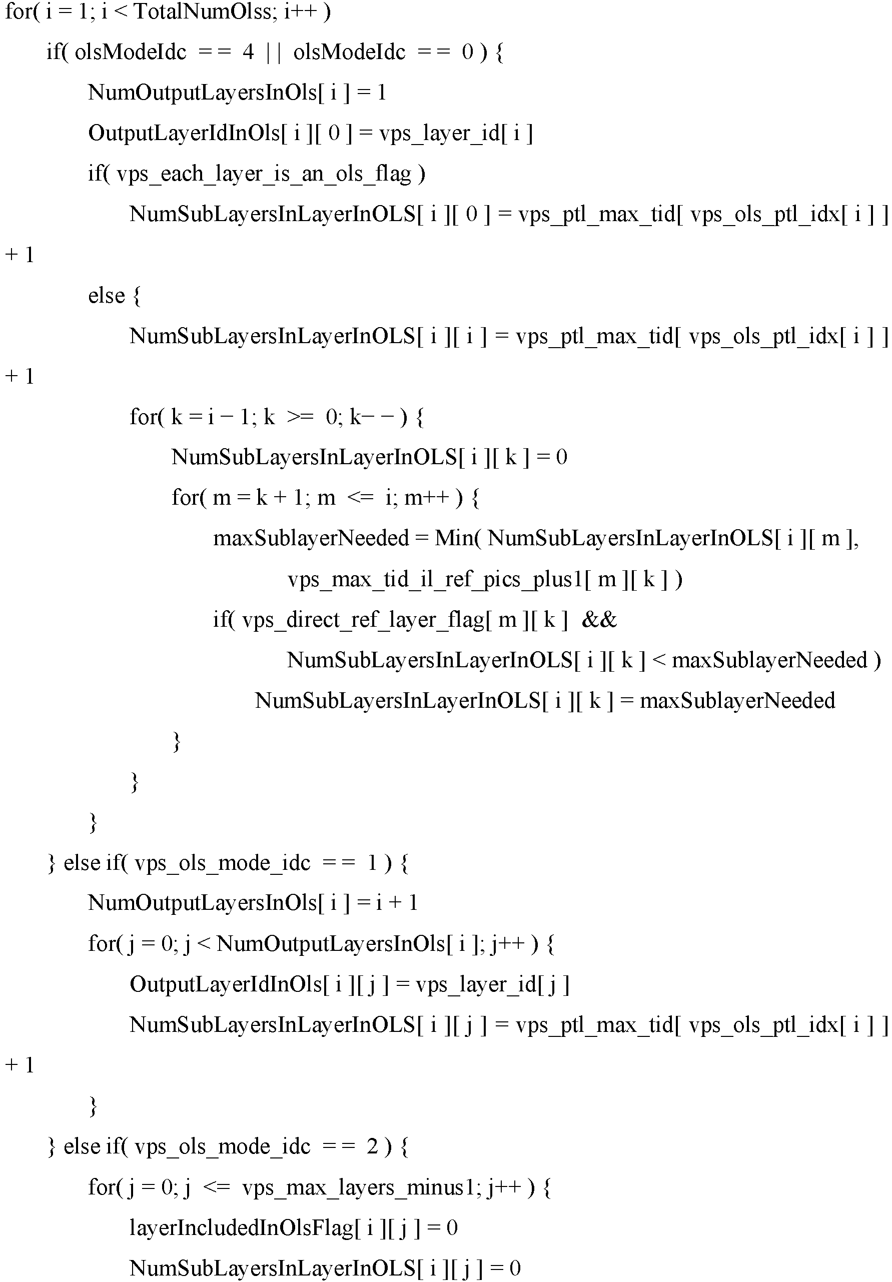

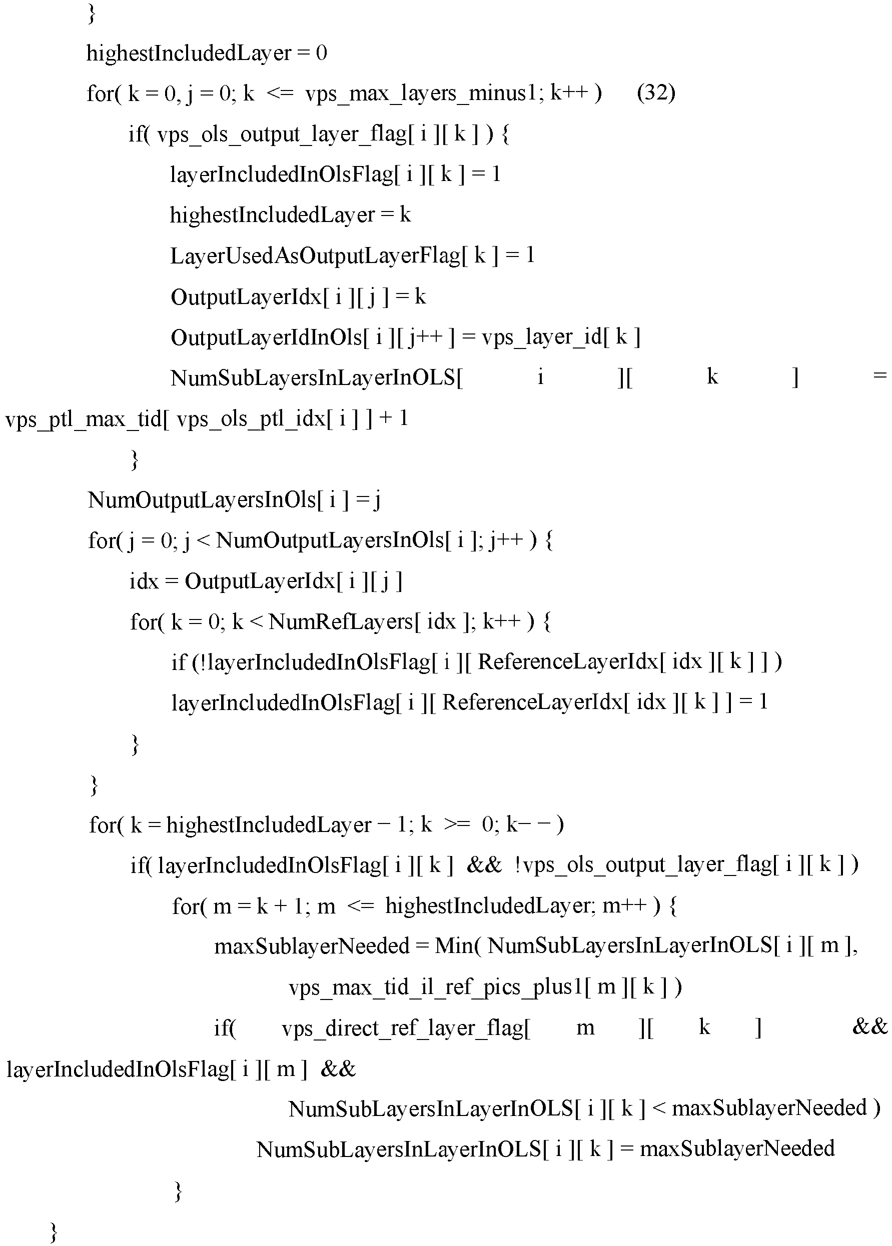

The variable NumLayersInOls[ i ], specifying the number of layers in the i-th OLS, the variable LayerIdInOls[ i ][ j ], specifying the nuh_layer_id value of the j-th layer in the i-th OLS, the variable NumMultiLayerOlss, specifying the number of multi-layer OLSs (i.e., OLSs that contain more than one layer), and the variable MultiLayerOlsIdx[ i ], specifying the index to the list of multi-layer OLSs for the i-th OLS when NumLayersInOls[ i ] is greater than 0, are derived as follows:

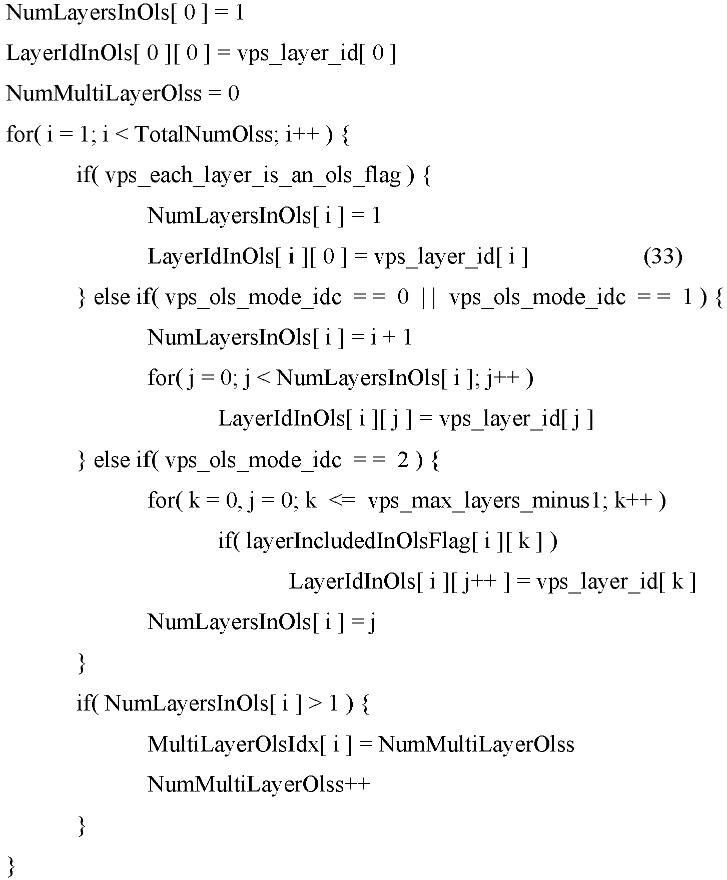

NOTE 1 - The 0-th OLS contains only the lowest layer (i.e., the layer with nuh_layer_id equal to vps_layer_id[ 0 ]) and for the 0-th OLS the only included layer is output.

The lowest layer in each OLS shall be an independent layer. In other words, for each i in the range of 0 to TotalNumOlss - 1, inclusive, the value of vps_independent_layer_flag[ GeneralLayerIdx[ LayerIdInOls[ i ][ 0 ] ] ] shall be equal to 1. Each layer shall be included in at least one OLS specified by the VPS. In other words, for each layer with a particular value of nuh_layer_id nuhLayerId equal to one of vps_layer_id[ k ] for k in the range of 0 to vps_max_layers_minus1, inclusive, there shall be at least one pair of values of i and j, where i is in the range of 0 to TotalNumOlss - 1, inclusive, and j is in the range of NumLayersInOls[ i ] - 1, inclusive, such that the value of LayerIdInOls[ i ][ j ] is equal to nuhLayerId.

**vps**_**num_ptls_minus1** plus 1 specifies the number of profile_tier_level( ) syntax structures in the VPS. The value of vps_num_ptls_minus1 shall be less than TotalNumOlss. When not present, the value of vps_num_ptls_minus1 is inferred to be equal to 0.

**vps**_**pt**_**present**_**flag**[ i ] equal to 1 specifies that profile, tier, and general constraints information are present in the i-th profile_tier_level( ) syntax structure in the VPS. vps_pt_present_flag[ i ] equal to 0 specifies that profile, tier, and general constraints information are not present in the i-th profile_tier_level( ) syntax structure in the VPS. The value of vps_pt_present_flag[ 0 ] is inferred to be equal to 1. When vps_pt_present_flag[ i ] is equal to 0, the profile, tier, and general constraints information for the i-th profile_tier_level( ) syntax structure in the VPS are inferred to be the same as that for the ( i - 1 )-th profile_tier_level( ) syntax structure in the VPS.

**vps_ptl**_**max**_**tid**[ i ] specifies the TemporalId of the highest sublayer representation for which the level information is present in the i-th profile_tier_level( ) syntax structure in the VPS and the TemporalId of the highest sublayer representation that is present in the OLSs with OLS index olsIdx such that vps_ols_ptl_idx[ olsIdx ] is equal to i. The value of vps_ptl_max_tid[ i ] shall be in the range of 0 to vps_max_sublayers_minus1, inclusive. When vps_default_ptl_dpb_hrd_max_tid_flag is equal to 1, the value of vps_ptl_max_tid[ i ] is inferred to be equal to vps_max_sublayers_minus1.

**vps**_**ptl**_**alignment**_**zero**_**bit** shall be equal to 0.

**vps_ols_ptl_idx**[ i ] specifies the index, to the list of profile_tier_level( ) syntax structures in the VPS, of the profile_tier_level( ) syntax structure that applies to the i-th OLS. When present, the value of vps_ols_ptl_idx[ i ] shall be in the range of 0 to vps_num_ptls_minus1, inclusive. When not present, the value of vps_ols_ptl_idx[ i ] is inferred as follows:
- If vps_num_ptls_minus1 is equal to 0, the value of vps_ols_ptl_idx[ i ] is inferred to be equal to 0.
- Otherwise (vps_num_ptls_minus1 is greater than 0 and vps_num_ptls_minus1 + 1 is equal to TotalNumOlss), the value of vps_ols_ptl_idx[ i ] is inferred to be equal to i.

When NumLayersInOls[ i ] is equal to 1, the profile_tier_level( ) syntax structure that applies to the i-th OLS is also present in the SPS referred to by the layer in the i-th OLS. It is a requirement of bitstream conformance that, when NumLayersInOls[ i ] is equal to 1, the profile_tier_level( ) syntax structures signalled in the VPS and in the SPS for the i-th OLS shall be identical.

Each profile_tier_level( ) syntax structure in the VPS shall be referred to by at least one value of vps_ols_ptl_idx[ i ] for i in the range of 0 to TotalNumOlss - 1, inclusive.

**vps_num**_**dpb_params**_**minus1** plus 1, when present, specifies the number of dpb_parameters() syntax strutcures in the VPS. The value of vps_num_dpb_params_minus1 shall be in the range of 0 to NumMultiLayerOlss - 1, inclusive.

The variable VpsNumDpbParams, specifying the number of dpb_parameters( ) syntax strutcures in the VPS, is derived as follows:

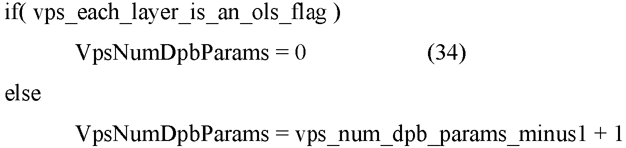

**vps_sublayer**_**dpb**_**params_present**_**flag** is used to control the presence of dpb_max_dec_pic_buffering_minus1[ j ], dpb_max_num_reorder_pics[ j ], and dpb_max_latency_increase_plus1[ j ] syntax elements in the dpb_parameters( ) syntax strucures in the VPS for j in range from 0 to vps_dpb_max_tid[ i ] - 1, inclusive, when vps_dpb_max_tid[ i ] is greater than 0. When not present, the value of vps_sub_dpb_params_info_present _flag is inferred to be equal to 0.

**vps_dpb_max_tid**[ i ] specifies the TemporalId of the highest sublayer representation for which the DPB parameters could be present in the i-th dpb_parameters( ) syntax strutcure in the VPS. The value of vps_dpb_max_tid[ i ] shall be in the range of 0 to vps_max_sublayers_minus1, inclusive. When not present, the value of vps_dpb_max_tid[ i ] is inferred to be equal to vpsmax_sublayers_minus1.

The value of vps_dpb_max_tid[ vps_ols_dpb_params_idx[ m ] ] shall be greater than or equal to vps_ptl_max_tid[ vps_ols_ptl_idx[ n ] ] for each m-th multi-layer OLS for m from 0 to NumMultiLayerOlss - 1, inclusive, and n being the OLS index of the m-th multi-layer OLS among all OLSs.

**vps_ols_dpb_pic_width**[ i ] specifies the width, in units of luma samples, of each picture storage buffer for the i-th multi-layer OLS.

**vps_ols_dpb_pic_height**[ i ] specifies the height, in units of luma samples, of each picture storage buffer for the i-th multi-layer OLS.

**vps_ols_dpb_chroma_format**[ i ] specifies the greatest allowed value of sps_chroma_format_idc for all SPSs that are referred to by CLVSs in the CVS for the i-th multi-layer OLS.

**vps_ols_dpb_bitdepth_minus8**[ i ] specifies the greatest allowed value of sps_bitdepth_minus8 for all SPSs that are referred to by CLVSs in the CVS for the i-th multi-layer OLS. The value of vps_ols_dpb_bitdepth_minus8[ i ] shall be in the range of 0 to 2, inclusive.

NOTE 2 - For decoding the i-th multi-layer OLS, the decoder could safely allocate memory for the DPB according to the values of the syntax elements vps_ols_dpb_pic_width[ i ], vps_ols_dpb_pic_height[ i ], vps_ols_dpb_chroma_format[ i ], and vps_ols_dpb_bitdepth_minus8[ i ].

**vps_ols_dpb_params_idx**[ i ] specifies the index, to the list of dpb_parameters( ) syntax structures in the VPS, of the dpb_parameters( ) syntax structure that applies to the i-th multi-layer OLS. When present, the value of vps_ols_dpb_params_idx[ i ] shall be in the range of 0 to VpsNumDpbParams - 1, inclusive.

When vps_ols_dpb_params_idx[ i ] is not present, it is inferred as follows:
- If VpsNumDpbParams is equal to 1, the value of vps_ols_dpb_params_idx[ i ] to be equal to 0.
- Otherwise (VpsNumDpbParams is greater than 1 and equal to NumMultiLayerOlss), the value of vps_ols_dpb_params_idx[ i ] is inferred to be equal to i.

For a single-layer OLS, the applicable dpb_parameters( ) syntax structure is present in the SPS referred to by the layer in the OLS.

Each dpb_parameters( ) syntax structure in the VPS shall be referred to by at least one value of vps_ols_dpb_params_idx[ i ] for i in the range of 0 to NumMultiLayerOlss - 1, inclusive.

**vps_timing_hrd_params_present_flag** equal to 1 specifies that the VPS contains a general_timing_hrd_parameters( ) syntax structure and other HRD parameters. vps_timing_hrd_params_present _flag equal to 0 specifies that the VPS does not contain a general_timing_hrd_parameters( ) syntax structure or other HRD parameters.

When NumLayersInOls[ i ] is equal to 1, the general_timing_hrd_parameters( ) syntax structure and the ols_timing_hrd_parameters( ) syntax structure that apply to the i-th OLS are present in the SPS referred to by the layer in the i-th OLS.

**vps_sublayer_cpb_params_present_flag** equal to 1 specifies that the i-th ols_timing_hrd_parameters( ) syntax structure in the VPS contains HRD parameters for the sublayer representations with TemporalId in the range of 0 to vps_hrd_max_tid[ i ], inclusive. vps_sublayer_cpb_params_present_flag equal to 0 specifies that the i-th ols_timing_hrd_parameters( ) syntax structure in the VPS contains HRD parameters for the sublayer representation with TemporalId equal to vps_hrd_max_tid[ i ] only. When vps_max_sublayers_minus1 is equal to 0, the value of vps_sublayer_cpb_params_present_flag is inferred to be equal to 0.

When vps_sublayer_cpb_params_present_flag is equal to 0, the HRD parameters for the sublayer representations with TemporalId in the range of 0 to vps_hrd_max_tid[ i ] - 1, inclusive, are inferred to be the same as that for the sublayer representation with TemporalId equal to vps_hrd_max_tid[ i ]. These include the HRD parameters starting from the fixed_pic_rate_general_flag[ i ] syntax element till the sublayer_hrd_parameters( i ) syntax structure immediately under the condition "if( general_vcl_hrd_params_present_flag )" in the ols_timing_hrd_parameters syntax structure.

**vps_num_ols_timing_hrd_params_minus1** plus 1 specifies the number of ols_timing_hrd_parameters( ) syntax structures present in the VPS when vps_timing_hrd_params_present_flag is equal to 1. The value of vps_num_ols_timing_hrd_params_minus1 shall be in the range of 0 to NumMultiLayerOlss - 1, inclusive.

**vps_hrd_max_tid**[ i ] specifies the TemporalId of the highest sublayer representation for which the HRD parameters are contained in the i-th ols_timing_hrd_parameters( ) syntax structure. The value of vps_hrd_max_tid[ i ] shall be in the range of 0 to vpsmax_sublayers_minus1, inclusive. When not present, the value of vps_hrd_max_tid[ i ] is inferred to be equal to vps_max_sublayers_minus1.

The value of vps_hrd_max_tid[ vps_ols_timing_hrd_idx[ m ] ] shall be greater than or equal to vps_ptl_max_tid[ vps_ols_ptl_idx[ n ] ] for each m-th multi-layer OLS for m from 0 to NumMultiLayerOlss - 1, inclusive, and n being the OLS index of the m-th multi-layer OLS among all OLSs.

**vps_ols**_**timing_hrd_idx**[ i ] specifies the index, to the list of ols_timing_hrd_parameters( ) syntax structures in the VPS, of the ols_timing_hrd_parameters( ) syntax structure that applies to the i-th multi-layer OLS. The value of vps_ols_timing_hrd_idx[ i ] shall be in the range of 0 to vps_num_ols_timing_hrd_params_minus1, inclusive.

When vps_ols_timing_hrd_idx[ i ] is not present, it is inferred as follows:
- If vps_num_ols_timing_hrd_params_minus1 is equal to 0, the value of vps_ols_timing_hrd_idx[[ i ] is inferred to be equal to 0.
- Otherwise (vps_num_ols_timing_hrd_params_minus1 + 1 is greater than 1 and equal to NumMultiLayerOlss), the value of vps_ols_timing_hrd_idx[ i ] is inferred to be equal to i.

For a single-layer OLS, the applicable ols_timing_hrd_parameters( ) syntax structure is present in the SPS referred to by the layer in the OLS.

Each ols_timing_hrd_parameters( ) syntax structure in the VPS shall be referred to by at least one value of vps_ols_timing_hrd_idx[ i ] for i in the range of 1 to NumMultiLayerOlss - 1, inclusive.

**vps_extension flag** equal to 0 specifies that no vps_extension_data_flag syntax elements are present in the VPS RBSP syntax structure. vps_extension_flag equal to 1 specifies that vps_extension_data_flag syntax elements might be present in the VPS RBSP syntax structure. vps_extension_flag shall be equal to 0 in bitstreams conforming to this version of this Specification. However, some use of vps_extension_flag equal to 1 could be specified in some future version of this Specification, and decoders conforming to this version of this Specification shall allow the value of vps_extension_flag equal to 1 to appear in the syntax.

**vps_extension_data_flag** could have any value. Its presence and value do not affect the decoding process specified in this version of this Specification. Decoders conforming to this version of this Specification shall ignore all vps_extension_data_flag syntax elements.

A decoder conforming to the multilayer profile needs to be able to decode several layers for each frame. For each picture of a layer, the full toolset of the encoder can be used. Thus, the processing power required at the decoder can reach the sum of the processing power needed to decode each layer. PTL can set constraints for each OLS, but not per layer. In practice, the constraints will be roughly the worst case of all decoded layer (e.g. layer L1 in the example below) multiplied by the number of layers, which can be overestimated, such as illustrated in the example below. In VVC, Profile, Tier, Level, are defined for a given OLS, and optionally for sub-layers, but not per layer. Sub-layers refer to temporal scalability and temporal layers. Classical GOP structures may have temporal scalability, where some sub-layers can be discarded to reduce the frame-rate. The sub-layer definition assumes that every layer is based on the same GOP structure and encoder configuration. The number of pictures that can be stored in the DPB and the number of frames that can be decoded per second depend on the maximum size of a picture, regardless of the multilayer configuration. This is not optimal in a spatial scalability scenario when lower layers are of reduced dimensions. This lack of per-layer granularity results in over dimensioning the decoder for some multilayer configurations.

In this example, a spatial scalable bitstream is considered with two layers and a scaling ratio of 2. Layer 0 (L0), the first or base layer (which is an independent layer) is a HD (High-Definition) color video (1920x1080 pixels), with 4:2:0 color sampling. Layer 1 (L1), the second layer, or enhancement layer is a UHD (Ultra High Definition) color video (3840x2160), with 4:2:0 color sampling. This enhancement layer is dependent on layer L0, with a scaling factor of two in both directions. Table 6 shows DPB size and frame rate PTL constraints for multilayer decoding for this example.

**Table 6 - DPB and frame rate PTL constraints for multilayer decoding**

| | Base layer | Enhancement layer | PTL requirements for decoding L1 | Tight technical requirement for decoding L1 |
|---|---|---|---|---|
| | L0 (HD) | L1 (UHD) | OLS with L1 + dependent L0 | L0 + L1 |
| Width | 1920 | 3840 | 3840 | |
| Height | 1080 | 2160 | 2160 | |
| PicWidthMaxInSamplesY multiple of Max(8, MinCbSizeY) | 1920 | 3840 | 3840 | |
| PicHeightMaxInSamplesY multiple of Max(8, MinCbSizeY) | 1080 | 2160 | 2160 | |
| PicSizeMaxInSamplesY (PicWidthMaxInSamplesY * PicHeightMaxInSamplesY) | 2073600 | 8294400 | 8294400 | 10368000 |
| numDecPics | 1 | N/A | 2 | N/A |
| AuSizeMaxInSamplesY (1) | | | 16588800 | |
| max frame rate @level 5.0 | 129 | 32 | 16 | 26 |
| MaxLumaSr = 267 386 880 | | | | |
| max frame rate @level 5.1 | 258 | 64 | 32 | 52 |
| MaxLumaSr = 534 773 760 | | | | |
| max frame rate @level 5.2 | 516 | 129 | 64 | 103 |
| MaxLumaSr = 1 069 547 520 | | | | |
| MaxDpbSize @ level 5.x | 16 | 8 | 8 | 2 L0 + 8 L1 |
| MaxLumaPs = 8 912 896 | | | | 6 L0 + 7 L1 |
| | | | | 10 L0 + 6 L1 |

| | | | | |
|---|---|---|---|---|
| (1) Let numDecPics be the number of pictures in an AU (Access Unit). The variable AuSizeMaxInSamplesY is set equal to PicSizeMaxInSamplesY * numDecPics. | | | | |

Values for HD represents the base layer only, and values for UHD are given as example for an independent UHD video. With the definition of the PTL in VVC (using PicSizeMaxInSamplesY), using level 5.1 would allow a frame rate of 32 frames per second (fps) only (calculated as MaxLumaSr/AuSizeMaxInSamplesY), and a DPB size of 8 pictures that would be shared between the two layers. For higher frame rates, the level has to be increased to level 5.2 for the bitstream to be compliant. If the number of pictures in the DPB is higher (for example 6 pictures per layer, which would require 12 pictures to be stored in the DPB for decoding the 2 layers), level 6 has to be chosen. Indeed, in this case, the DPB capacity is computed from the value of PicSizeMaxInSamplesY associated with the UHD layer L1 without considering the fact that the layer L0 has a lower resolution. Said otherwise, with these properties, i.e. two layers, frame rate higher than 32 fps, and resolutions HD/UHD, the bitstream would be tagged as a level 5.2 bitstream and a decoder would need to conform to at least level 5.2 to be able to decode it.

The last column shows the technical requirements for the addition of the two layers while taking into account the fact that the base layer has a reduced resolution. In this case, its constraints would be lower than the ones of the enhancement layer. Based on the decoding capabilities in samples per second, an achievable frame rate of 52 frames per second can be obtained (e.g. computed) for decoding the full OLS (L0 + L1) instead of 32 frames per second. Indeed, in this case, PicSizeMaxInSamplesY is equal to the number of samples in both pictures L0 and L1 and consequently a frame rate of 52 fps is obtained (calculated as MaxLumaSr/sum(PicSizeMaxInSamplesPerLayer), where PicSizeMaxInSamplesPerLayer is the maximum size in pixels of each layer). In addition, if the memory size of each layer is decoupled from one another, more frames can be allocated in the DPB, in particular {2,8} (2 for the base layer and 8 for the enhancement layer), or {6, 7}, or {10, 6}.

Aspects of the present disclosure describe how profile and constraints can be adapted to multilayer coding constraints. Typically, memory and processing power constraints can be derived differently for multilayer, or syntax can be adapted for each (sub)layer. In particular, defining a constraint for one specific access unit or for one specific layer makes it possible to avoid over dimensioning a DPB.

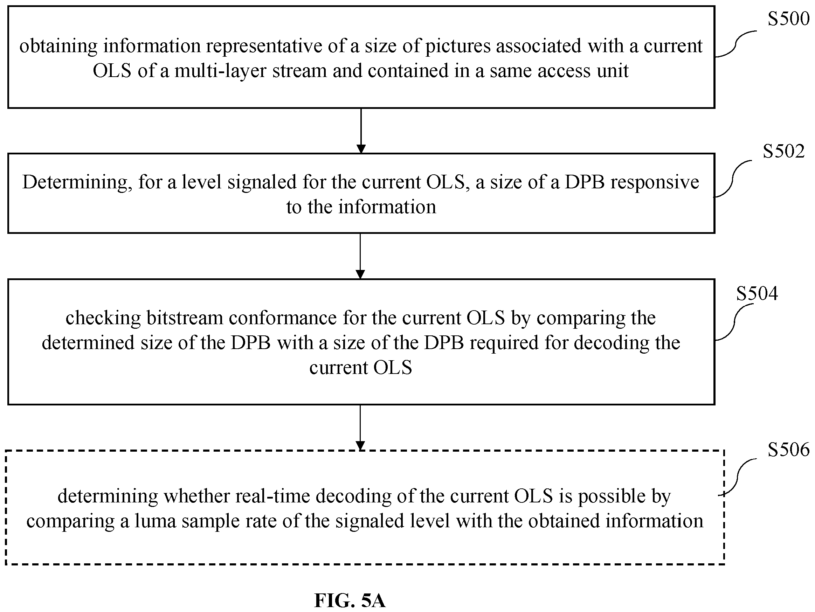

**FIG. 5A** depicts a flowchart of a method for checking bitstream conformance according to an example. The method may be implemented in an encoder or in a decoder.

At S500, information is obtained that is representative of a size, e.g. in luma samples, of pictures associated with a current OLS in a multi-layer bitstream, the pictures being contained in a same access unit (i.e. the pictures being associated with the same time for output from a DPB). In an example, the information is a value of the size. An OLS is defined over the whole duration of the video. Herein, we consider the pictures of the OLS associated with the same time for output from the DPB, i.e. belonging to the same AU. The size is, for example, the sum of the number of luma samples of pictures associated with the current OLS in one and the same access unit. As an example, in the above example, an access unit for the full OLS (L0 + L1) comprises a HD image from the layer L0 and an UHD image from the layer L1. Consequently, the size in luma samples of pictures associated with the current OLS is equal to 10 368 000 samples, i.e. 2073600+8294400.

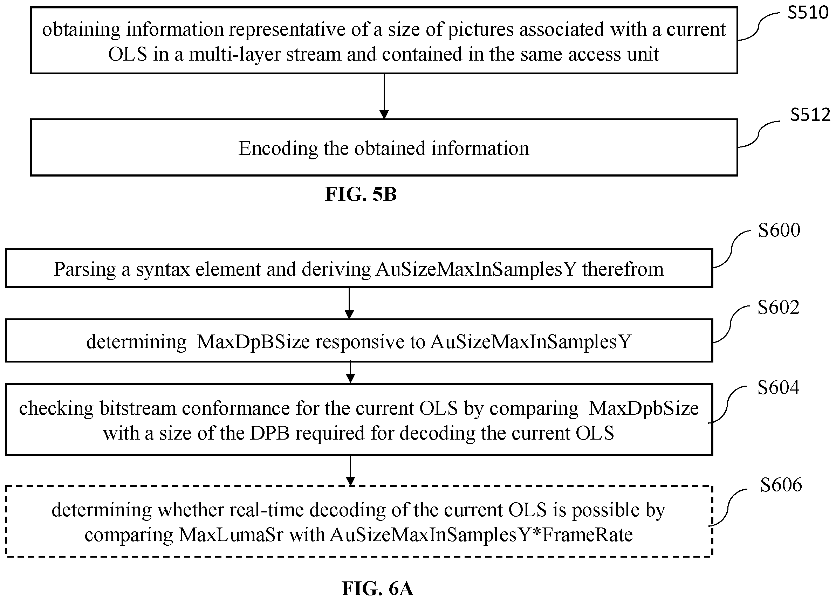

The information may be obtained from a newly defined syntax element signaled in the bitstream as further illustrated by FIG. 6A or may be derived from existing syntax elements signaled in the bitstream and defined for example in VVC which are diverted from their classical use. At S502, a size (e.g. a maximum size) of the DPB for a level associated with the current OLS (e.g. an indicated level, i.e. a level indicated in the bitstream) is determined from the obtained information. The size of the DPB is for example a size in units of pictures storage buffers, e.g. a sum of picture storage buffers of one AU. In a particular example, the size of the DPB is the maximum size of the DPB in units of picture storage buffers, where each picture storage buffer can store all the pictures of the same AU given the size of pictures in the current OLS obtained at S500.

At S504, bitstream conformance is checked for the current OLS by comparing the determined size of the DPB for the level (e.g. indicated in the bitstream) with a size of the DPB required for decoding the current OLS (e.g. a maximum size). The size of the DPB required for decoding the current OLS may be obtained (e.g. parsed) from the bitstream. The bitstream is conform in the case where the size of the DPB required for decoding the current OLS is lower than or equal to the DPB size determined at S502 for the level. Indeed, the DPB (Decoded Picture Buffer) that hold pictures before outputting them must be large enough to handle the multiple layers. The size of the DPB required for decoding the current OLS may be obtained from a syntax element signaled in the bitstream. A decoder conforming to the specification at a level higher or equal to the level indicated for the current OLS shall be capable of decoding the current OLS. In the case where the decoder is not capable of decoding the current OLS, then the decoder may signal it, may request new streams, or may decode a different OLS, etc. Therefore, various actions may be put in place in this situation.

Optionally, at S506, it is determined whether real-time decoding of the current OLS is achievable (e.g. possible) by comparing a luma sample rate of the indicated level with the obtained information. In an example, real-time decoding of the current OLS is achievable in the case where the luma sample rate is greater than the size obtained at S500 multiplied by frame rate, i.e. a number of image per second. The luma sample rate is for example obtained from the level indicated in the bitstream. A decoder conforming to a level higher or equal to the indicated level shall be capable of real-time decoding the current OLS. With reference to Table 3, a decoder conforming to level 5.0 is capable of decoding 267 386 880 sample per second.

A corresponding encoding method is disclosed on **FIG. 5B****.**

At S510, information representative of a size of pictures contained in the same access unit and associated with a current output layer set is obtained.

A S512, the obtained information is encoded in a syntax structure associated with the current output layer set.

**FIG. 6A** depicts a flowchart of a method for checking bitstream conformance according to a particular example. In this example, the constraints are defined for a current OLS per access unit, which contains the pictures of all the decoded layers associated with the same time for output. The variables PicWidthMaxInSamplesY and PicHeightMaxInSamplesY are defined as in VVC, and additionally the variable AuSizeMaxInSamplesY is signaled for multilayer bitstreams.

At S600, a syntax element (e.g., a VPS syntax element) is parsed (e.g. decoded) from the bitstream. The syntax is a newly defined syntax element (e.g. denoted vps_ols_dpb_au_size[ i ]) that specifies a size, e.g. in units of luma samples, of the pictures associated with the i-th multi-layer OLS and contained in one and the same access unit. For example, it is the sum of the number of luma samples of pictures associated with the i-th OLS and contained in one and the same access unit.

To this aim, a new VPS syntax structure may be defined in Table 7 below, wherein the newly defined syntax element (in italic bold) is added to the existing VVC syntax elements of Table 5.

**Table 7 - New VPS syntax with AU picture size**

| | |
|---|---|
| video_parameter_set_rbsp( ) { | **Descript or** |
| [...] | |
| for( i = 0; i < NumMultiLayerOlss; i++ ) { | |
| vps_ols_dpb_pic_width[ i ] | ue(v) |
| vps_ols_dpb_pic_height[ i ] | ue(v) |
| ***vps*_*ols*_*dpb*_*au*_*size[ i ]*** | **ue(v)** |
| vps_ols_dpb_chroma_format[ i ] | u(2) |
| vps_ols_dpb_bitdepth_minus8[ i ] | ue(v) |
| if( VpsNumDpbParams > 1 && VpsNumDpbParams != NumMultiLayerOlss ) | |
| vps_ols_dpb_params_idx[ i ] | ue(v) |
| } | |
| [...] | |

From the parsed syntax element, information (AuSizeMaxInSamplesY) representative of a size of pictures associated with a current OLS in a multi-layer stream and contained in the same access unit is obtained.

For an OLS with OLS index TargetOlsIdx, the variable AuSizeMaxInSamplesY, and the applicable dpb_parameters( ) syntax structure are derived as follows:
If NumLayersInOls[ TargetOlsIdx ] is equal to 1, or if layer i is independent (and there exists an OLS that contains only this layer i), AuSizeMaxInSamplesY is set equal to sps_pic_width_max_in_luma_samples * sps_pic_height_max_in_luma_samples (as in VVC), where sps_pic_width_max_in_luma_samples and sps_pic_height_max_in_luma_samples are found in the SPS referred to by the layer in the OLS, and the applicable dpb_parameters( ) syntax structure is also found in that SPS.

Otherwise, AuSizeMaxInSamplesY is set equal to vps_ols_dpb_au_size[MultiLayerOlsIdx[TargetOlsIdx]], and the applicable dpb_parameters( ) syntax structure is identified by vps_layer_dpb_params_idx[ MultiLayerOlsIdx[TargetOlsIdx]] found in the VPS.

At S602, a size of the DPB, denoted MaxDpbSize, is determined for a level associated with the current OLS (e.g. the level indicated in the bitstream, a.k.a indicated level) responsive to the obtained information. In a particular example, MaxDpbSize is a maximum size of the DPB in units of picture storage buffers, for the indicated level, given AuSizeMaxInSamplesY.

MaxDpbSize, may be derived as follows: 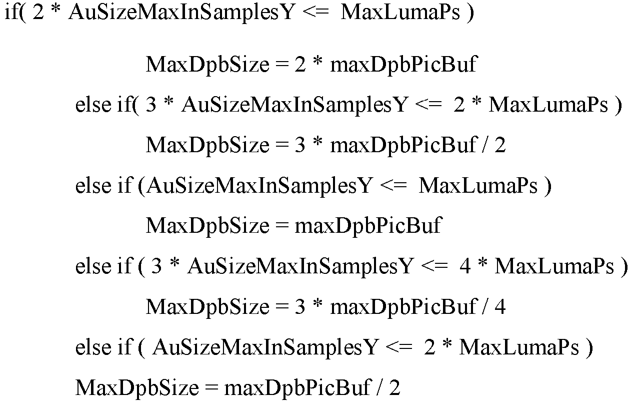 where MaxLumaPs is specified in Table 2 from the indicated level, maxDpbPicBuf is equal to a constant value, e.g. to 8, and dpb_max_dec_pic_buffering_minus1[ Htid ] is found in or derived from the applicable dpb_parameters() syntax structure (as previously in VVC).

At S604, bitstream conformance is checked for the current OLS by comparing MaxDpbSize with a size of the DPB required for decoding the current OLS. The size of the DPB required for decoding the current OLS may be obtained from the value of dpb_parameter() syntax element dpb_max_dec_pic_buffering_minus1[ Htid ]. When the specified level is not level 15.5, it is a requirement of bitstream conformance that the value of dpb_max_dec_pic_buffering_minus1[ Htid ] + 1 is less than or equal to MaxDpbSize. A decoder conforming to a level higher or equal to the specified level is capable of decoding the bitstream.

Optionally, at S606, it is determined whether real-time decoding of the current OLS is achievable (e.g. possible) by comparing a luma sample rate (e.g. a maximum luma sample rate) of the indicated level (e.g. rate MaxLumaSr) with the obtained information (AuSizeMaxInSamplesY). With reference to Table 3, a decoder conforming to level 5.0 is capable of decoding 267 386 880 sample per second. The performance limits are thus defined for a level by MaxLumaSr, where real-time decoding would be achievable only if MaxLumaSr is greater than or equal to AuSizeMaxInSamplesY*FrameRate.

The new conformance limits are given in the Table 8. This table shows that the spatially scalable example (HD, UHD) fits at level 5.1 at 50 Hz and the DPB memory allows 6 pictures per layer to be retained in the DPB. Therefore, the DPB memory allows to retain 6 pictures for L0 and 6 pictures for L1 while in the previous configuration the DPB memory could only retain 8 pictures in total as mentioned in Table 6 for level 5.x, i.e. 5.0, 5.1, and 5.2 .

**Table 8 - DPB and frame rate PTL constraints for multilayer decoding by defining per-AU dpb parameters**

| | L0 (HD) | L1 (UHD) | L0 + L1 |
|---|---|---|---|
| Width | 1920 | 3840 | |
| Height | 1080 | 2160 | |
| PicWidthMaxInSamplesY multiple of Max(8, MinCbSizeY) | 1920 | 3840 | 3840 |
| PicHeightMaxInSamplesY multiple of Max(8, MinCbSizeY) | 1080 | 2160 | 2160 |
| PicSizeMaxInSamplesY (PicWidthMaxInSamplesY * PicHeightMaxInSamplesY) | 2073600 | 8294400 | 8294400 |
| AuSizeMaxInSamplesY (1) | | | 10368000 |
| max frame rate @level 5.0 MaxLumaSr = 267 386 880 | 129 | 32 | 26 |
| max frame rate @level 5.1 MaxLumaSr = 534 773 760 | 258 | 64 | 52 |
| max frame rate @level 5.2 MaxLumaSr = 1 069 547 520 | 516 | 129 | 103 |
| MaxDpbSize @ level 5.x MaxLumaPs = 8 912 896 | 16 | 8 | 6 (L0+L1) |

In a variant of the method depicted on FIG. 6A, no newly defined syntax element vps_ols_dpb_au_size is decoded. Said otherwise, the semantics and constraints derivation can be changed without changing the VVC syntax. For example, the VPS syntax elements vps_ols_dpb_pic_width[ i ] and vps_ols_dpb_pic_height[ i ] can be defined as picture size parameters as opposed to physical picture size to ensure that their product is equal to the desired AuSizeMaxInSamplesY value, the latter being the value that would have been transmitted in the syntax element vps_ols_dpb_au_size[i] . Said otherwise, on the encoder side the value encoded for the syntax elements vps_ols_dpb_pic_width[ i ] and vps_ols_dpb_pic_height[ i ] are fake values (in the sense that they are not physical picture size ) defined such that their product is equal to AuSizeMaxInSamplesY, e.g. to 10368000 in the example of Table 7.

The value vps_ols_dpb_pic_height can have predefined values depending on the range in which AuSizeMaxInSamplesY falls. vps_ols_dpb_pic_height can take predefined values amongst {32, 64, 128, 256, 512, 1080, 1600, 1920, 2048, 2160, 2500}.

if (NumLayersInOls[ TargetOlsIdx ] is greater than 1), AuSizeMaxInSamplesY is set equal to vps_ols_dpb_pic_width[ MultiLayerOlsIdx[ TargetOlsIdx ] ] x vps_ols_dpb_pic_height[ MultiLayerOlsIdx[ TargetOlsIdx ] ], and the applicable dpb_parameters( ) syntax structure is identified by vps_ols_dpb_params_idx[ MultiLayerOlsIdx[ TargetOlsIdx ] ] found in the VPS.

Therefore, at S600, the syntax elements vps_ols_dpb_pic_width[ i ] and vps_ols_dpb_pic_height[ i ] are parsed (e.g. decoded) from the bitstream, and from the parsed syntax elements, information (AuSizeMaxInSamplesY) representative of a size of pictures associated with a current OLS in a multi-layer stream and contained in the same access unit is obtained, wherein AuSizeMaxInSamplesY is equal to the product of the values of the two parsed syntax elements.

In the above examples, the value of AuSizeMaxInSamplesY is either derived from the newly defined syntax element vps_ols_dpb_au_size[ i ] or from the existing syntax elements vps_ols_dpb_pic_width[ MultiLayerOlsIdx[ TargetOlsIdx ] ] and vps_ols_dpb_pic_height[ MultiLayerOlsIdx[ TargetOlsIdx ] ].

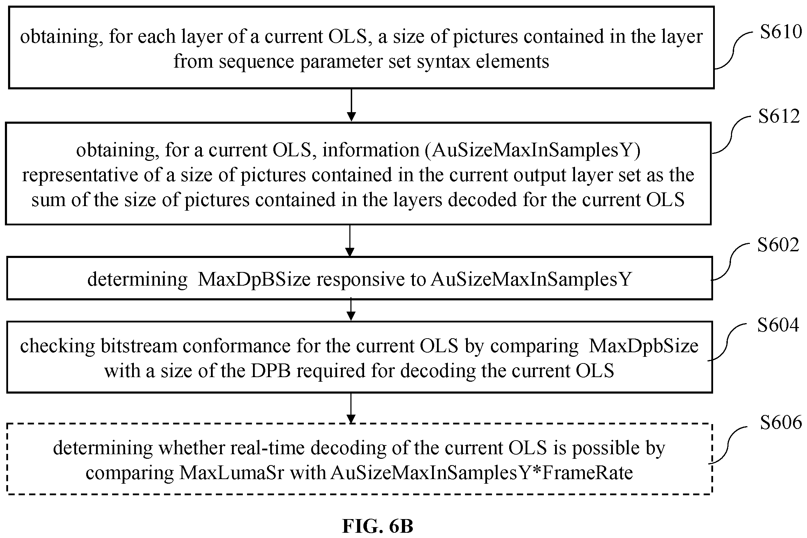

**FIG. 6B** depicts a flowchart of a method for checking bitstream conformance according to another particular example. The steps of the method that are identical to the steps of the method depicted on FIG. 6A are identified with the same numeral references and are not further disclosed. The method of FIG. 6B thus comprises the steps S602 to S606.In this example, SPS syntax elements are parsed (e.g. decoded) from the bitstream and the value of AuSizeMaxInSamplesY is derived from these SPS syntax elements.

More precisely, per layer requirements are obtained from signaled information in the SPS. In an example, the syntax elements of the SPS are a maximum width, in units of luma samples, of each picture of a current output layer set, referring to the sequence parameter set and a maximum height, in units of luma samples, of each picture of a current output layer set referring to the sequence parameter set.

Thus, at S610, for each layer of a current OLS, a size of pictures contained in the layer is obtained from sequence parameter set syntax elements. As an example, for a layer i, PicWidthMaxInSamplesY[i] is set equal to sps_pic_width_max_in_luma_samples, PicHeightMaxInSamplesY[i] is set equal to sps_pic_height_max_in_luma_samples, and PicSizeMaxInSamplesY[i] is set equal to PicWidthMaxInSamplesY[i] * PicHeightMaxInSamplesY[i], where sps_pic_width_max_in_luma_samples and sps_pic_height_max_in_luma_samples are found in the SPS referred to by the layer i. The applicable dpb_parameters( ) syntax structure for layer i is also found in that SPS.

At S612, for a current OLS with index k, AuSizeMaxInSamplesY is thus derived as a sum of PicSizeMaxInSamplesY[i] for every layer i decoded for that OLS. In an example, AuSizeMaxInSamplesY may be computed as follows :

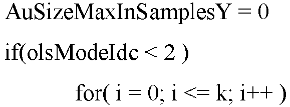

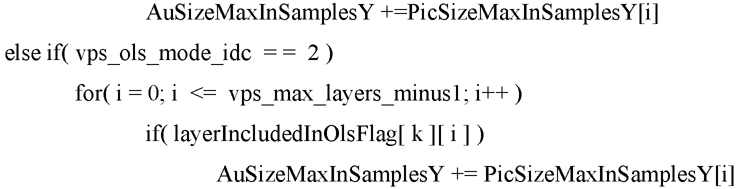

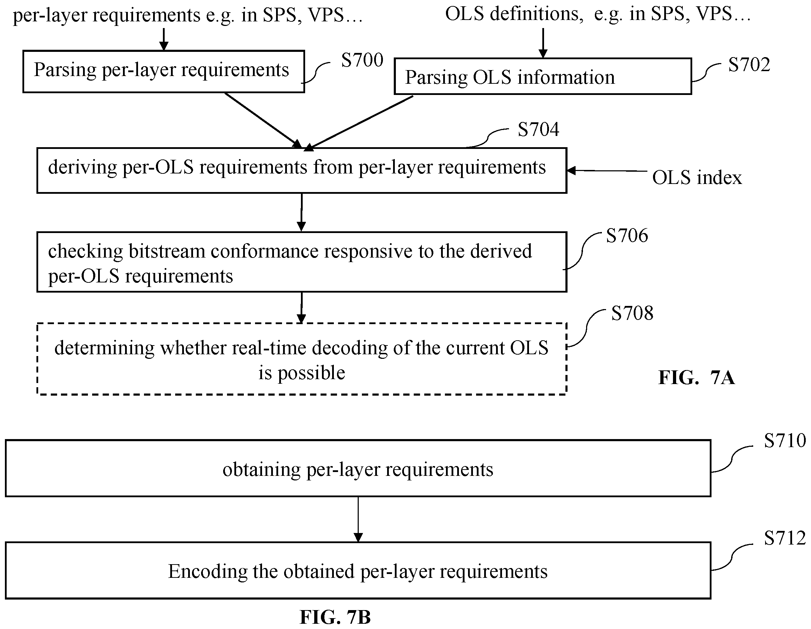

AuSizeMaxInSamplesY can then be used to determine, at S602, a size of the DPB (e.g. MaxDpbSize) for the current OLS for checking bitstream conformance at S604 and to determine at S606 whether real-time decoding of the current OLS is achievable as previously. In the following examples, the value of AuSizeMaxInSamplesY is derived from per-layer information. Per-OLS definitions are useful for overall requirements, but some per-layer information would allow to specify a lower level and avoid over-dimensioning the decoder, as explained in the examples below. Therefore, in order to specify more precisely the constraints and not over estimating the necessary level, the constraints can be defined per layer, instead of per OLS-AU. Then, based on the OLS information, per-layer requirements are aggregated to derive requirements per OLS, as depicted on **FIG. 7A****.** In the following, the terms "requirements" and "constraints" are used interchangeably.

In S700, syntax elements representative of per-layer requirements are derived (e.g. parsed from the bitstream). In an example, the parameters can be defined for example in the VPS (Video Parameter Set) syntax structure as described in Table 9. The newly defined elements are in Bold.

**Table 9 - DPB parameters syntax. Modified values from VVC are highlighted in bold**

| | |
|---|---|
| [...] | |
| if( !vps_each_layer_is_an_ols_flag ) { | |
| **vps_num_dpb_params_minus1** | ue(v) |
| if( vps_max_sublayers_minus1 > 0 ) | |
| vps_sublayer_dpb_params_present _flag | u(1) |
| for( i = 0; i < **VpsNumDpbParams;** i++ ) { | |
| if( !vps_default_ptl_dpb_hrd_max_tid_flag ) | |
| vps_dpb_max_tid[ i ] | u(3) |
| dpb_parameters( vps_dpb_max_tid[ i ], vps_sublayer_dpb_params_present_flag ) | |
| } | |
| for( i = 0; i <= **vps_max_layers_minus1;** i++ ) { | |
| **vps_layer_dpb_pic_width[ i ]** | ue(v) |
| **vps_layer_dpb_pic_height[ i ]** | ue(v) |
| **vps_layer_dpb_chroma_format[ i ]** | u(2) |
| **vps_layer_dpb_bitdepth_minus8[ i ]** | ue(v) |
| **if( VpsNumDpbParams** > 1 && **VpsNumDpbParams** != **vps_max_layers_minus1+1)** | |
| **vps_layer_dpb_params_idx[ i ]** | ue(v) |
| } | |
| [...] | |
| } | |

The semantics of the newly defined syntax elements used in Table 9 are specified below.

**vps_num**_**dpb_params_minus1** plus 1, when present, specifies the number of dpb_parameters() syntax strutcures in the VPS. The value of vps_num_dpb_params_minus1 shall be in the range of 0 to vpsmax_layers_minus1, inclusive.

The variable VpsNumDpbParams, specifying the number of dpb_parameters( ) syntax strutcures in the VPS, is derived as follows:

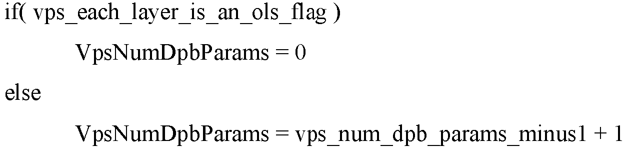

In a variant, this parameter is inferred to be equal to vps_max_layers_minus1+1 (the number of layers defined in the VPS), and it is not signaled.

**vps_sublayer_dpb_params_present_flag** is used to control the presence of dpb_max_dec_pic_buffering_minus1[ j ], dpb_max_num_reorder_pics[ j ], and dpb_max_latency_increase_plus1[ j ] syntax elements in the dpb_parameters( ) syntax strucures in the VPS for j in range from 0 to vps_dpb_max_tid[ i ] - 1, inclusive, when vps_dpb_max_tid[ i ] is greater than 0. When not present, the value of vps_sub_dpb_params_info_present_flag is inferred to be equal to 0.

**vps_dpb_max_tid**[ i ] specifies the TemporalId of the highest sublayer representation for which the DPB parameters could be present in the i-th dpb_parameters( ) syntax strutcure in the VPS. The value of vps_dpb_max_tid[ i ] shall be in the range of 0 to vps_max_sublayers_minus1, inclusive. When not present, the value of vps_dpb_max_tid[ i ] is inferred to be equal to vps_max_sublayers_minus1.

**vps_layer_dpb_pic_width**[ i ] specifies the width, in units of luma samples, of each picture storage buffer for the i-th layer.

**vps_layer_dpb_pic_height**[ i ] specifies the height, in units of luma samples, of each picture storage buffer for the i-th layer.

**vps_layer_dpb_chroma_format**[ i ] specifies the greatest allowed value of sps_chroma_format_idc for all SPSs that are referred to by CLVSs in the CVS for the i-th laye. **vps_layer_dpb_bitdepth_minus8**[ i ] specifies the greatest allowed value of sps_bitdepth_minus8 for all SPSs that are referred to by CLVSs in the CVS for the i-th layer. The value of vps_layer_dpb_bitdepth_minus8[ i ] shall be in the range of 0 to 2, inclusive.

**vps_layer_dpb_params_idx**[ i ] specifies the index, to the list of dpb_parameters( ) syntax structures in the VPS, of the dpb_parameters( ) syntax structure that applies to the i-th layer. When present, the value of vps_layer_dpb_params_idx[ i ] shall be in the range of 0 to VpsNumDpbParams - 1, inclusive.

When vps_layer_dpb_params_idx[ i ] is not present, it is inferred as follows:
- If VpsNumDpbParams is equal to 1, the value of vps_layer_dpb_params_idx[ i ] to be equal to 0.
- Otherwise (VpsNumDpbParams is greater than 1 and equal to vps_max_layers_minus1+1), the value of vps layer_dpb_params_idx[ i ] is inferred to be equal to i.

For an independent layer, the applicable dpb_parameters() syntax structure may be present in the SPS referred to by the layer.

Each dpb_parameters( ) syntax structure in the VPS shall be referred to by at least one value of vps_layer_dpb_params_idx[ i ] for i in the range of 0 to vps_max_layers_minus1, inclusive. Other semantics are left unchanged.

In another example, the elements under the loop on all layers (for( i = 0; i <= vps_max_layers_minus1; i++ )) are present only for non-independent layers. For an independent layer, in case an OLS exists that includes only this given layer, these elements are signaled in the SPS referred to by this layer. In that case, the indexing of the elements can be kept the same, the signaling being skipped for independent layers, or the indexing changes and an indirection is added to retrieve the correct index from the layer number. In the following, it is assumed that the same indexing is kept (i.e., layer index is used to index the signaled elements).

At S702, OLS information is parsed from the bitstream. This information makes it possible to know which layer(s) is (are) decoded. Example of such information is defined in Table 5, for example: vps_direct_ref_layer_flag that define dependencies between layers, vps_ols_mode_idc, vps_ols_output_layer_flag that define which layers are output. The OLS information may be in the SPS, the VPS, etc.

At S704, per-OLS requirement(s) (e.g. in terms of memory size) is (are) derived from per-layer requirements obtained at S700 for a current OLS, e.g. identified by its index. Therefore, the verification of the DPB memory size requirement for the decoding of an OLS that contains more than one layer (otherwise if the OLS contains only one layer, no change is needed compared to current VVC) involves the parsing of the layer parameters of the given OLS at S700.

For the i-th layer (layer with GeneralLayerIdx[ nuh_layer_id ] = i), in an OLS with OLS index TargetOlsIdx, the variables PicWidthMaxInSamplesY[i], PicHeightMaxInSamplesY[i], and PicSizeMaxInSamplesY[i] and the applicable dpb_parameters( ) syntax structure are derived as follows:
∘ If NumLayersInOls[ TargetOlsIdx ] is equal to 1, or if layer i is independent (and there exists an OLS that contains only this layer i), PicWidthMaxInSamplesY[i] is set equal to sps_pic_width_max_in_luma_samples, PicHeightMaxInSamplesY[i] is set equal to sps_pic_height_max_in_luma_samples, and PicSizeMaxInSamplesY[i] is set equal to PicWidthMaxInSamplesY[i] * PicHeightMaxInSamplesY[i], where sps_pic_width_max_in_luma_samples and sps_pic_height_max_in_luma_samples are found in the SPS referred to by the layer in the OLS, and the applicable dpb_parameters( ) syntax structure is also found in that SPS.
∘ Otherwise, PicWidthMaxInSamplesY[i] is set equal to vps_layer_dpb_pic_width[ i ], PicHeightMaxInSamplesY[i] is set equal to vps_layer_dpb_pic_height[ i ], PicSizeMaxInSamplesY[i] is set equal to PicWidthMaxInSamplesY[i] * PicHeightMaxInSamplesY[i], and the applicable dpb_parameters( ) syntax structure is identified by vps_layer_dpb_params_idx[ i ] found in the VPS.

The DPB memory size required to decode an OLS for each sub-layer Htid OLSDPBMemorySize[Htid] is the sum of the memory (a.k.a buffer) sizes needed to decode all the layers in the k-th OLS and is derived as follows :
- if vps_each_layer_is_an_ols_flag is not zero, each OLS is one layer, and the dpb size requirement is the same as in VVC: OLSDPBMemorySize[Htid] = (dpb_max_dec_pic_buffering_minus1[Htid] + 1) x PicSizeMaxInSamplesY[i], where dpb_max_dec_pic_buffering_minus1 is signaled in the dpb_parameters( ) syntax structure applicable to the k-th layer (i=k).
- otherwise it is the sum of the size of all the decoded layers (included in that OLS):

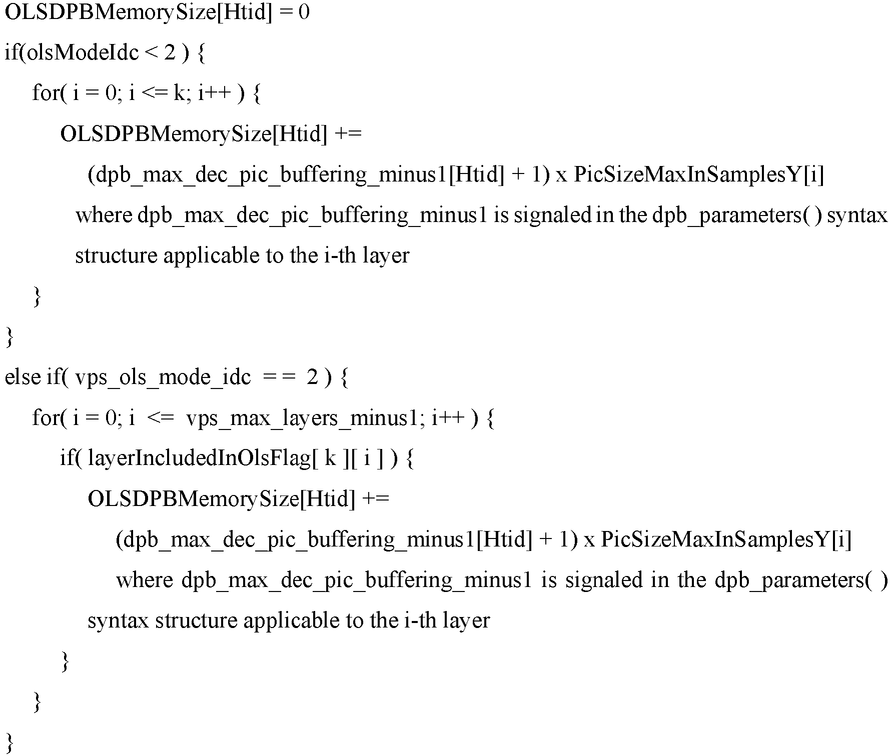

At S706, bitstream conformance is checked for the current OLS responsive to derived per-OLS requirements. In an example, the derived DPB memory size required to decode an OLS OLSDPBMemorySize[Htid] is compared to m x MaxLumaPs.

When the specified level is not level 15.5, it is a requirement of bitstream conformance that the value of OLSDPBMemorySize[ Htid ] is less than or equal to m x MaxLumaPs, for any Htid where the value of MaxLumaPs is derived from the level signaled in the profile_tier_level syntax structure for the k-th OLS. For example, in VVC m=8. Consequently, a decoder conforming to a level higher or equal to the signaled level would be capable of decoding the k-th OLS.

The levels define the maximum number of picture buffering in the DPB regarding the maximum picture size for that level. Given that each layer can have a different size, the memory of the DPB can be allocated such that each layer in a given OLS can reserve a fraction of the total available DPB memory. Therefore, in a variant, to check at S706 that an OLS of a bitstream conforms to the DPB picture buffering memory constrains, when the specified level is not level 15.5, it is determined whether the value of dpbMaxDecPicBuffering[Htid] is less than P, where P is the number of pictures of the maximum size that can fit in the DPB. For example, in VVC P=8. For a given OLS k, dpbMaxDecPicBuffering[Htid] is derived at S704 as follows:
The picture buffering number that is needed by one layer is derived as follows:

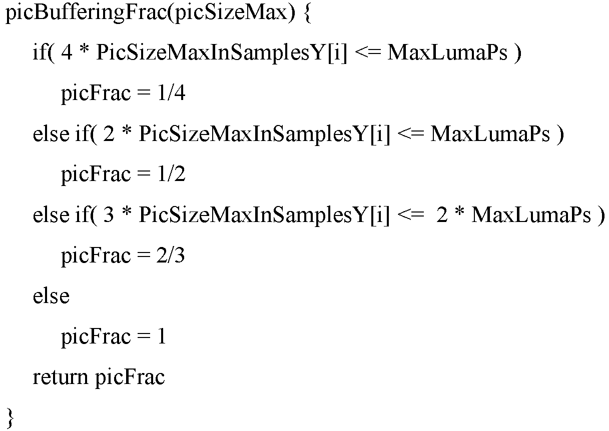

Note that any fraction value can be used here. It is however practical to have simple fractions that reflect for example the scaling ratio between layers in a spatial scalability scenario (e.g., ¼ for HD to UHD scalability).

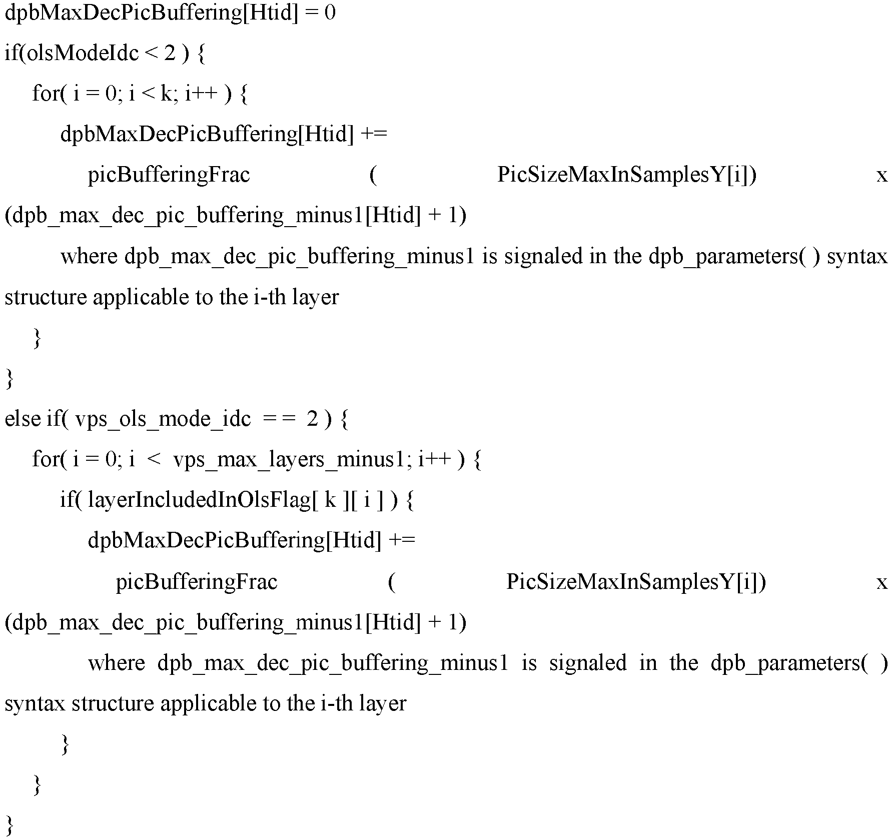

Optionally, at S708, it is determined whether real-time decoding of the current OLS is achievable (e.g. possible). Required computation performances for a given level is expressed by Max Luma Sample Rate (MaxLumaSr). The conformance to a given level is checked by computing AuSizeMaxInSamplesY. Here, to be more accurate for multilayer videos, the maximum number of samples to decode is the sum of the number of samples of every layer in the OLS k. It is derived as follows:

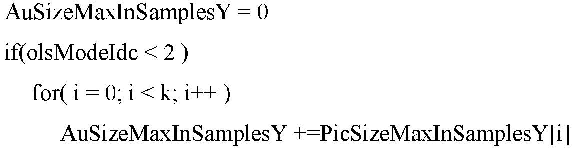

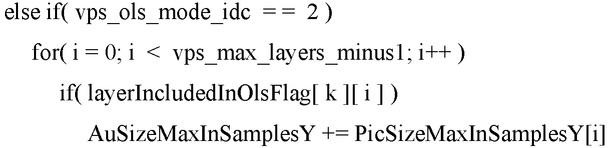

That way, the value of AuSizeMaxInSamplesY is not overestimated. The performance limits are thus defined by MaxLumaSr, where real-time decoding would be achievable only if MaxLumaSr is greater than or equal to AuSizeMaxInSamplesY*FrameRate.

A corresponding encoding method is disclosed on **FIG. 7B****.**

At S710, per-layer requirements are obtained from the picture size and from the picture buffering depending on the GOP structure.

At S712, the obtained per-layer requirements are encoded for example in a syntax structure such as the one mentioned in Table 9.

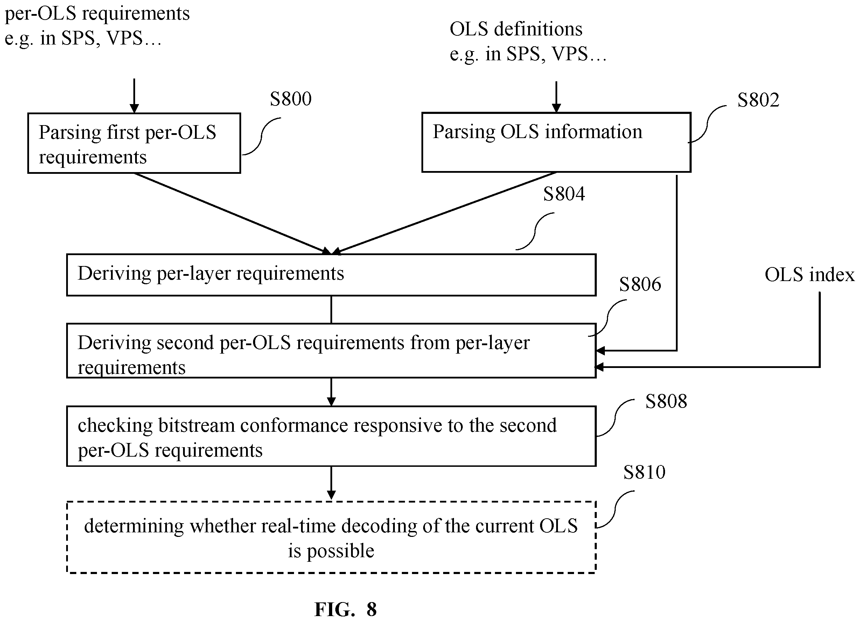

In another example depicted on **FIG. 8**, the dpb_parameters( ) syntax structure is signaled per OLS as in the current VVC. Consequently, to adjust the constraints more closely to multilayer bitstreams, per-layers information are extracted (a.k.a. parsed or decoded) if they are available. All the values are initialized for example as in the current VVC, then if available in the bitstream (e.g. SPS, VPS), other values can be adjusted, as depicted on **FIG. 8****.** In this embodiment, the syntax is not changed as opposed to the example of FIG. 7A.

At S800, first per-OLS requirements are parsed from the bitstream. As an example, these first per-OLS requirements are PicSizeMaxInSamplesY and dpb_max_dec_pic_buffering_minus1. Indeed, requirements, namely the values of PicSizeMaxInSamplesY and dpb_max_dec_pic_buffering_minus1, are signaled per OLS and are thus parsed at S800.At S802, OLS information is parsed from the bitstream in the same way as in S702.

Per-layer values (a.k.a. requirements/constraints), e.g. Layer_PicSizeMaxInSamplesY[i] and layer_DpbMaxDecPicBuffering[i], are derived at S804 from the values/requirements signaled per-OLS. layer_PicSizeMaxInSamplesY specifies the maximum size in luma samples of one picture, for decoding layer i. In equations above, it replaces PicSizeMaxInSamplesY[i] that is obtained for layer i.

layer_DpbMaxDecPicBuffering[i] specifies the maximum required size of the DPB in units of picture storage buffers, for decoding layer i. In equations above, it replaces (dpb_max _dec_pic_buffering_minus1 [Htid] + 1) that is obtained for layer i.

In an example, the per-layer requirements are derived by comparing OLSs two-by-two, for example as follows. Layer_PicSizeMaxInSamplesY[0] is set equal to sps_pic_width_max_in_luma_samples x sps_pic_height_max_in_luma_samples where sps_pic_width_max_in_luma_samples and sps_pic_height_max_in_luma_samples are found in the SPS referred to by the layer 0, and layer _DpbMaxDecPicBuffering[0] is derived from dpb_max_dec_pic_buffering_minus1 signaled in the applicable dpb_parameters() syntax structure, also found in that SPS, as DpbMaxDecPicBuffering[0] = dpb_max_dec_pic_buffering_minus1 + 1 . Because the first layer (layer 0) is required to be independent, it is likely that these values are present in the SPS. If they are not present, they are derived as for other layers, as in the following.

The maximum picture size of layer i (Layer_PicSizeMaxInSamplesY[i]) is set as the minimum of the sizes required for all the OLSs that include this given layer, and OlsMinDpb_max_dec_pic_buffering_minus1[i] is set as the minimum number of DPB pictures required to decode an OLS containing this layer:

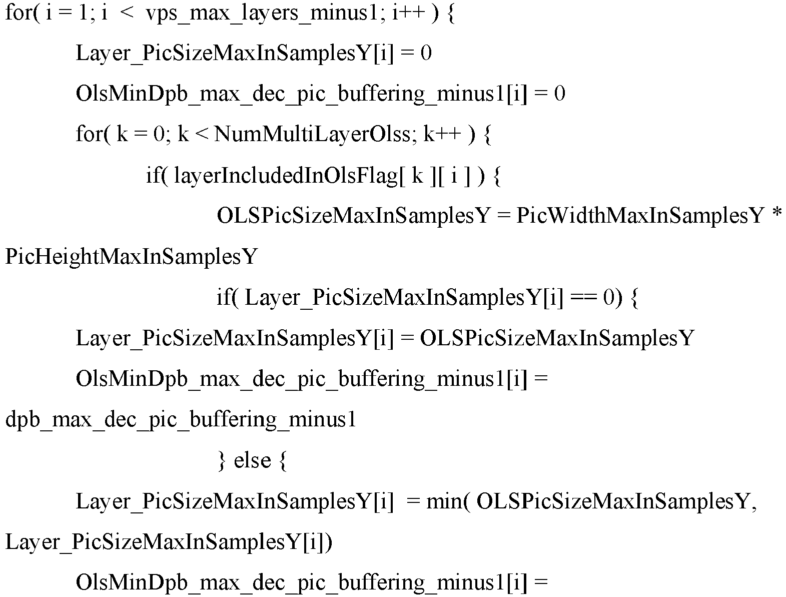

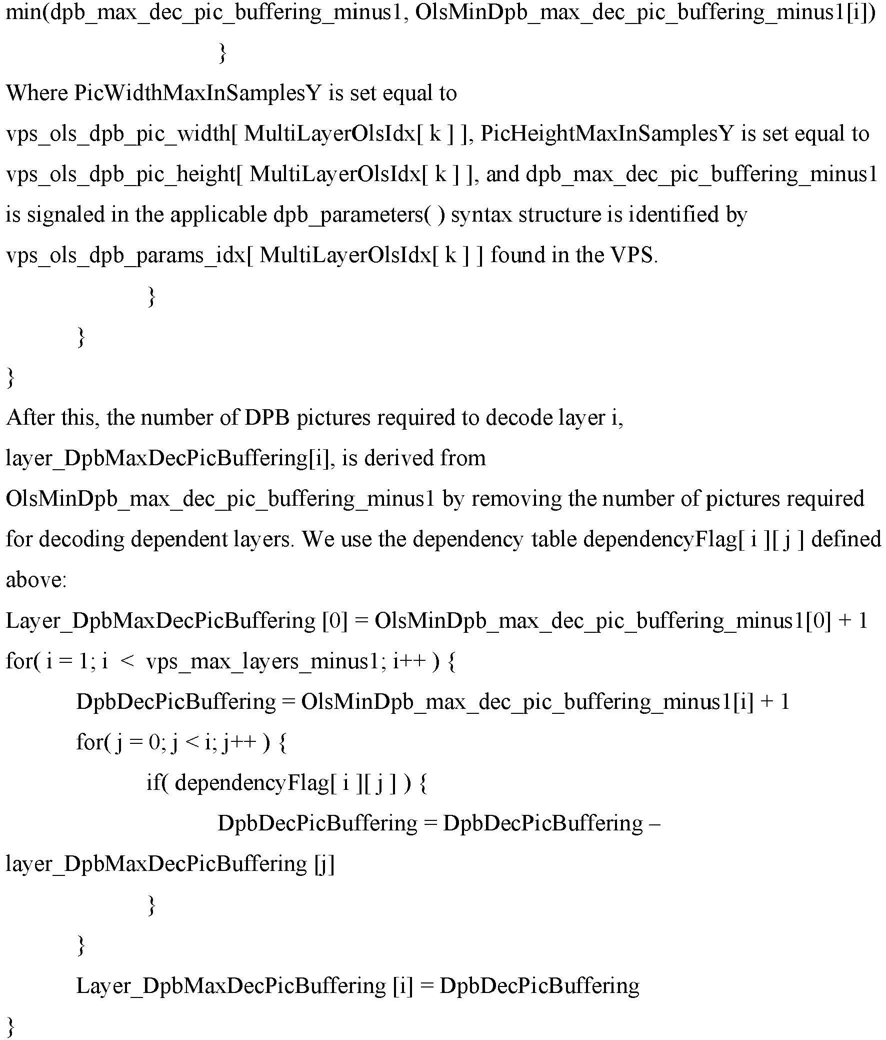

Note that for layer i, it is required that a dependent layer has a lower ID. That explains the "j < i " in the second for-loop condition.

After this, all necessary per-layer requirement values are available, and embodiments disclosed with respect to FIG.7 previous section (where per-layer constraint are explicitly signaled) are used to derive precisely the PTL conformance (PicSizeMaxInSamplesY replaces PicSizeMaxInSamplesY[i] that is obtained for layer i, and layer_DpbMaxDecPicBuffering[i] replaces dpb_max_dec_pic_buffering_minus1[Htid] + 1 that is obtained for layer i). Performance limits can also be derived with these per-layer constraints. Said otherwise, S806 is identical to S704, S808 is identical to S706 and S810 is identical to S708. Therefore, in S806, second per-OLS requirements (e.g. OLSDPBMemorySize[Htid] ) are derived which are the same as the per-OLS requirements derived at S704.

Note that this only works if the OLSs are defined incrementally. For example, if there are three layers, and 2 OLSs: one with the base layer, and the other with the 2 other layers depending on the base layer. In that case, the minimum size requirement for the 2 higher layers would be set to the maximum of the size of the 2 higher layers, and per-layer DBP pictures requirement cannot be derived. Therefore, this method can only be used if vps_ols_mode_idc is equal to 0 or 1.

vps_ols_mode_idc >= 2 is not the common setting for scalable use-cases. In that case, per-OLS constraints are directly used, as they may be precise enough (picture size can be equal for the different layers.

In yet another variant, it is also possible to signal constraints per OLS or per-layer constraints depending on vps_ols_mode_idc.
vps_ols_mode_idc >= 2 is not the common setting for scalable use-cases. In that case, per-OLS constraints may be precise enough.
In this embodiment, whether constraints are signaled per-layer or per-OLS in the VPS is constrained on the value of vps_ols_mode_idc (in the current VVC syntax, vps_ols_mode_idc is signaled before the constraints):
   - if vps_ols_mode_idc < 2, the constraints (this includes vps_layer_dpb_pic_width, vps_layer_dpb_pic_height and dpb_parameters syntax structure) are defined per layer, as defined above and the conforming constraints are also derived as defined above.

- Otherwise (if vps_ols_mode_idc >= 2), the constraints (this includes vps dpb_pic_width, vps dpb_pic_height and dpb_parameters syntax structure) are defined per OLS as in the current VVC.

The present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Note that syntax elements as used herein, such as terms in equations and algorithms, signal (e.g., flag, mode) labels/names, etc., such as MaxDpBSize, AuSizeMaxInSamplesY, MaxLumaSr, vps_ols_dpb_au_size[ i ] and so on, are descriptive terms. As such, they do not preclude the use of other syntax element names.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, bitstream conformance checking.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, bitstream conformance checking.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, or a slice header), or an SEI message. Other manners are also available, including for example manners common for system level or application level standards such as putting the information into one or more of the following:
a. SDP (session description protocol), a format for describing multimedia communication sessions for the purposes of session announcement and session invitation, for example as described in RFCs and used in conjunction with RTP (Real-time Transport Protocol) transmission.
b. DASH MPD (Media Presentation Description) Descriptors, for example as used in DASH and transmitted over HTTP, a Descriptor is associated with a Representation or collection of Representations to provide additional characteristic to the content Representation.
c. RTP header extensions, for example as used during RTP streaming.
d. ISO Base Media File Format, for example as used in OMAF and using boxes which are object-oriented building blocks defined by a unique type identifier and length also known as 'atoms' in some specifications.
e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments may refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular syntax element representative of a size of pictures associated with a current OLS in a multi-layer stream or per-layer requirements. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

A number of embodiments has been described above. Features of these embodiments can be provided alone or in any combination, across various claim categories and types.

A method for bitstream conformance checking of a multi-layer stream is disclosed. The method comprises:
obtaining, for each layer of a current output layer set of the multi-layer stream, a size of picture contained in the layer from syntax elements of a sequence parameter set referred to by the layer;
obtaining, for the current output layer set, information representative of a size of pictures contained in a same access unit and associated with the current output layer set as a sum of the size of pictures contained in the layers decoded for the current output layer set;
determining, for a level signaled for the current output layer set, a size of a decoded picture buffer responsive to the obtained information; and
checking bitstream conformance for the current output layer set by comparing the determined size of the decoded picture buffer with a size of the decoded picture buffer required for decoding the current output layer set.

An apparatus comprising one or more processors and at least one memory coupled to said one or more processors is disclosed, wherein said one or more processors are configured to perform:
obtaining, for each layer of a current output layer set of a multi-layer stream, a size of picture contained in the layer from syntax elements of a sequence parameter set referred to by the layer;
obtaining, for the current output layer set, information representative of a size of pictures contained in a same access unit and associated with the current output layer set as a sum of the size of pictures contained in the layers decoded for the current output layer set;
determining, for a level signaled for the current output layer set, a size of a decoded picture buffer responsive to the obtained information; and
checking bitstream conformance for the current output layer set by comparing the determined size of the decoded picture buffer with a size of the decoded picture buffer required for decoding the current output layer set.

In an example, the syntax elements of a sequence parameter set are a maximum width, in units of luma samples, of each picture of a current output layer set, referring to the sequence parameter set and a maximum height, in units of luma samples, of each picture of a current output layer set referring to the sequence parameter set.

In an example, checking bitstream conformance for the current output layer set comprises determining that the multi-layer stream for the current output layer set is conform in a case where the size of the decoded picture buffer required for decoding the current output layer set is less than or equal to the determined size of the decoded picture buffer.

In an example, the method comprises (or the one or more processors are configured to implement) determining whether decoding the current output layer set in real-time is possible by comparing a luma sample rate of a signaled level with the obtained information.

In an example, determining whether decoding the current output layer set in real-time is possible by comparing a luma sample rate of the signaled level with the obtained information comprises determining that decoding the current output layer set in real-time is possible in a case where the luma sample rate of the signaled level is above the obtained information multiplied by a frame rate.

In an example, the size of the decoded picture buffer required for decoding the current output layer set is parsed from a decoded picture buffer syntax structure.

A computer program comprising program code instructions for implementing the method according to any one of the examples when executed by a processor.

## Claims

1. A method for bitstream conformance checking of a multi-layer stream comprising:
obtaining (S610), for each layer of a current output layer set of the multi-layer stream, a size of picture contained in the layer from syntax elements of a sequence parameter set referred to by the layer;
obtaining (S612), for the current output layer set, information representative of a size of pictures contained in a same access unit and associated with the current output layer set as a sum of the size of pictures contained in the layers decoded for the current output layer set;
determining (S602), for a level signaled for the current output layer set, a size of a decoded picture buffer responsive to the obtained information; and
checking (S604) bitstream conformance for the current output layer set by comparing the determined size of the decoded picture buffer with a size of the decoded picture buffer required for decoding the current output layer set.

2. The method of claim 1, wherein the syntax elements of a sequence parameter set are a maximum width, in units of luma samples, of each picture of a current output layer set, referring to the sequence parameter set and a maximum height, in units of luma samples, of each picture of a current output layer set referring to the sequence parameter set.

3. The method of claim 1 or 2, wherein checking bitstream conformance for the current output layer set comprises determining that the multi-layer stream for the current output layer set is conform in a case where the size of the decoded picture buffer required for decoding the current output layer set is less than or equal to the determined size of the decoded picture buffer.

4. The method of any one of claims 1 to 3, wherein the method comprises determining whether decoding the current output layer set in real-time is possible by comparing a luma sample rate of a signaled level with the obtained information.

5. The method of claim 4, wherein determining whether decoding the current output layer set in real-time is possible by comparing a luma sample rate of the signaled level with the obtained information comprises determining that decoding the current output layer set in real-time is possible in a case where the luma sample rate of the signaled level is above the obtained information multiplied by a frame rate.

6. The method of any one of claims 1 to 5, wherein the size of the decoded picture buffer required for decoding the current output layer set is parsed from a decoded picture buffer syntax structure.

7. An apparatus comprising one or more processors and at least one memory coupled to said one or more processors, wherein said one or more processors are configured to perform:
obtaining, for each layer of a current output layer set of a multi-layer stream, a size of picture contained in the layer from syntax elements of a sequence parameter set referred to by the layer;
obtaining, for the current output layer set, information representative of a size of pictures contained in a same access unit and associated with the current output layer set as a sum of the size of pictures contained in the layers decoded for the current output layer set;
determining, for a level signaled for the current output layer set, a size of a decoded picture buffer responsive to the obtained information; and
checking bitstream conformance for the current output layer set by comparing the determined size of the decoded picture buffer with a size of the decoded picture buffer required for decoding the current output layer set.

8. The apparatus of claim 7, wherein the syntax elements of a sequence parameter set are a maximum width, in units of luma samples, of each picture of a current output layer set, referring to the sequence parameter set and a maximum height, in units of luma samples, of each picture of a current output layer set referring to the sequence parameter set.

9. The apparatus of claim 7 or 8, wherein checking bitstream conformance for the current output layer set comprises determining that the multi-layer stream for the current output layer set is conform in a case where the size of the decoded picture buffer required for decoding the current output layer set is less than or equal to the determined size of the decoded picture buffer.

10. The apparatus of any one of claims 7 to 9, wherein the one or more processors are configured to perform determining whether decoding the current output layer set in real-time is possible by comparing a luma sample rate of a signaled level with the obtained information.

11. The apparatus of claim 10, wherein determining whether decoding the current output layer set in real-time is possible by comparing a luma sample rate of the signaled level with the obtained information comprises determining that decoding the current output layer set in real-time is possible in a case where the luma sample rate of the signaled level is above the obtained information multiplied by a frame rate.

12. The apparatus of any one of claims 1 to 11, wherein the size of the decoded picture buffer required for decoding the current output layer set is parsed from a decoded picture buffer syntax structure.

13. A computer program comprising program code instructions for implementing the method according to any one of claims 1-6 when executed by a processor.
